# EUROPÄISCHE PATENTSCHRIFT

(11) **EP 1 876 214 B1**
(45) Veröffentlichungstag und Bekanntmachung des Hinweises auf die Patenterteilung: **06.10.2010**
(21) Anmeldenummer: 07013955.5
(22) Anmeldetag: 05.11.2003
(51) Int. Cl.: C09K 19/32, C09K 19/34, C09K 19/44, C09K 19/42

(54) **Flüssigkristallines Medium**
Liquid crystalline medium
Milieu cristallin liquide

(30) Priorität: 22.11.2002 DE 10254598
(43) Veröffentlichungstag der Anmeldung: 09.01.2008
(62) Teilanmeldung aus: 03779873.3
(73) Patentinhaber: Merck Patent GmbH, 64293 Darmstadt (DE)
(72) Erfinder: Klasen-Memmer, Melanie, Dr., 67259 Heuchelheim (DE); Bremer, Matthias, Dr., 64295 Darmstadt (DE); Lietzau, Lars, Dr., 64295 Darmstadt (DE)

(56) Entgegenhaltungen:
- EP-A- 0 637 585
- EP-A- 0 647 695
- WO-A-02/46330
- WO-A-94/18285
- WO-A-03/010120

## Beschreibung

Die Erfindung betrifft ein flüssigkristallines Medium auf der Basis eines Gemisches von polaren Verbindungen mit negativer dielektrischer Anisotropie, welches mindestens eine Verbindung der Formel I, 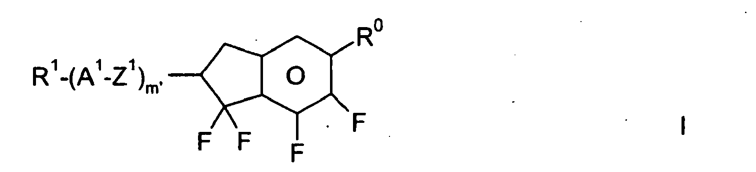 und eine oder mehrere Verbindungen der Formeln 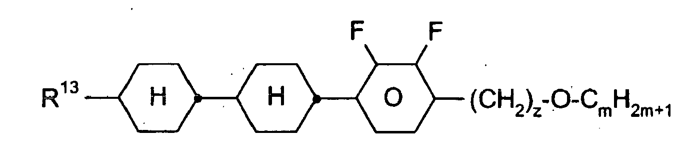 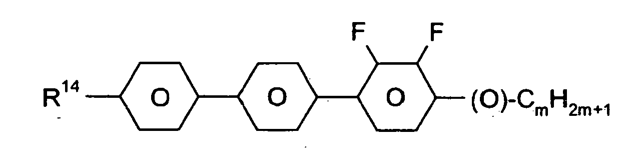 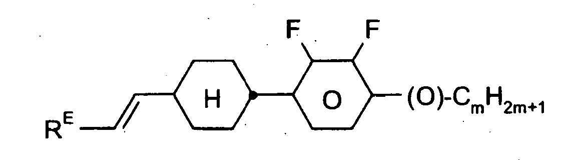 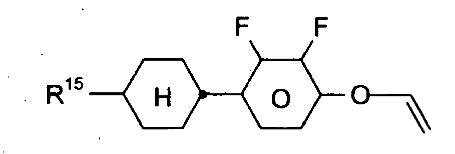 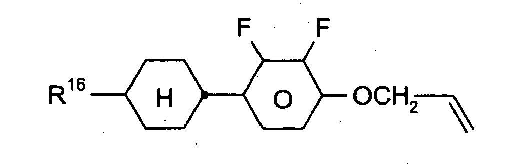 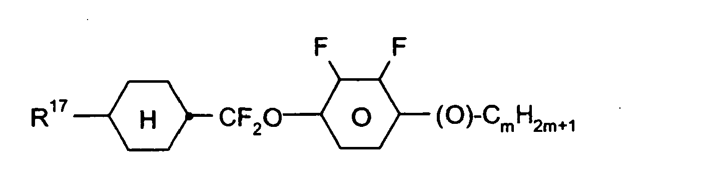 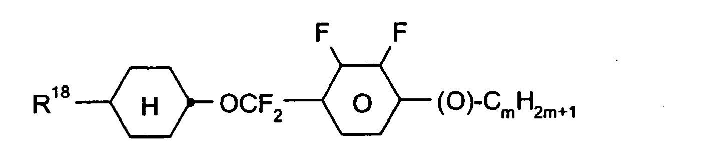 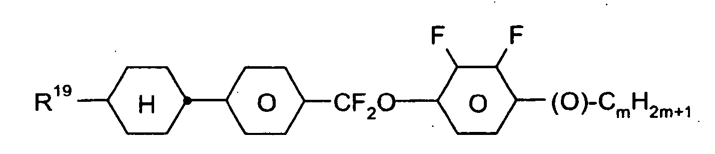 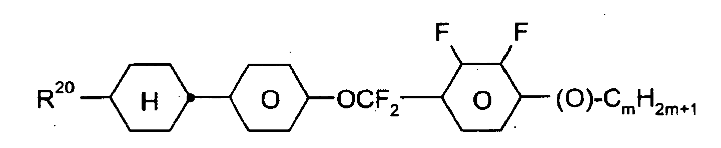 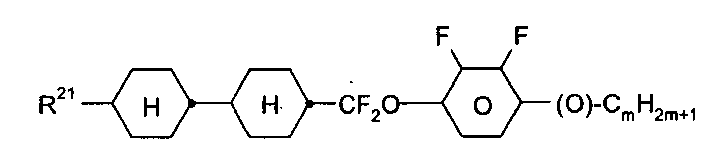 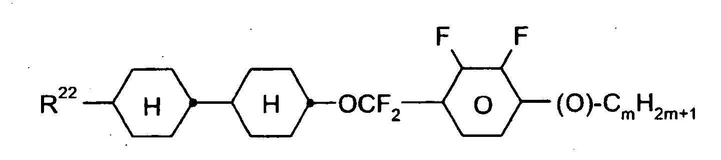 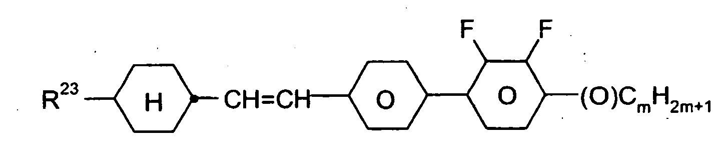 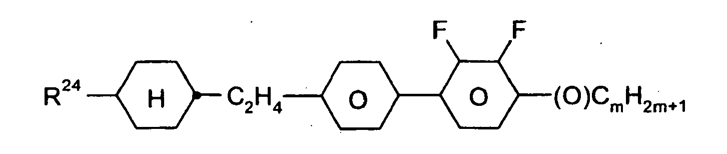 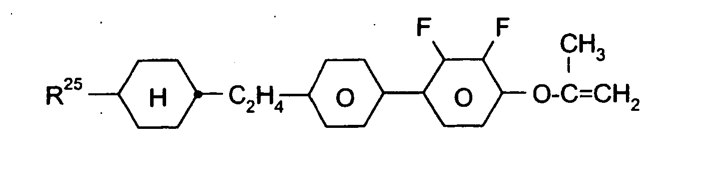 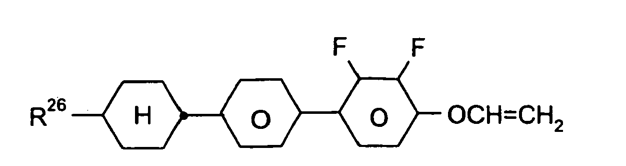 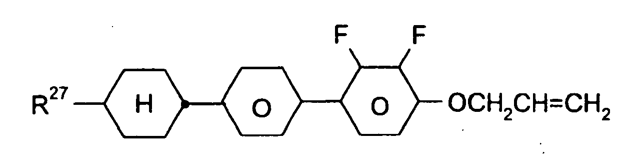 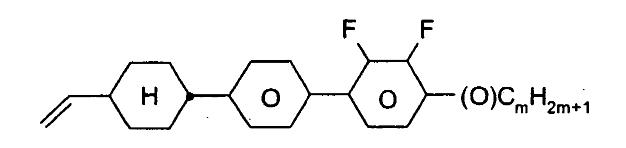 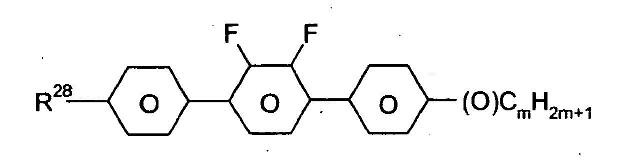 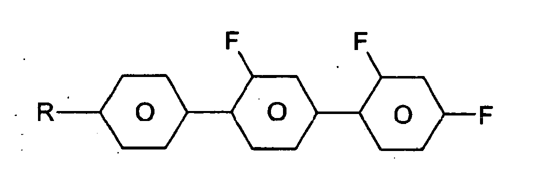 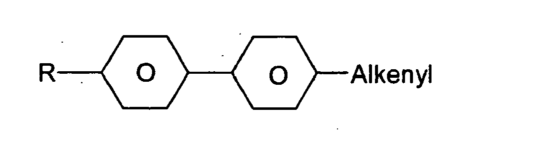 worin
- R⁰ und R¹: jeweils unabhängig voneinander H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 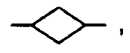 -C≡C-, -OC-O- oder -O-CO- so ersetzt sein können, dass O-Atome nicht direkt miteinander verknüpft sind,
- A¹: a) einen 1,4-Cyclohexenylen- oder 1,4-Cyclohexylenrest, worin eine oder zwei nicht benachbarte CH₂-Gruppen durch -O- oder -S- ersetzt sein können,
b) einen 1,4-Phenylenrest, worin eine oder zwei CH-Gruppen durch N ersetzt sein können,
c) einen Rest aus der Gruppe Piperidin-1,4-diyl-, 1,4-Bicyclo[2,2,2]-octylen-, Naphthalin-2,6-diyl, Decahydronaphthalin-2,6-diyl, 1,2,3,4-Tetrahydronaphthalin-2,6-diyl, Phenanthren-2,7-diyl, Fluoren-2,7-diyl,
   wobei die Reste a), b) und c) ein oder mehrfach durch Halogenatome substituiert sein können,
- Z¹: -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CH-, -C≡C- oder eine Einfach- bindung,
- m': 0, 1 oder 2
- R¹³-R²⁸: jeweils unabhängig voneinander, die für R¹ angegebenen Bedeutungen haben,
- z und m: jeweils unabhängig voneinander 1-6,
- R^{E}: H, CH₃, C₂H₅ oder n-C₃H₇,
- R: Alkyl, Alkenyl, Alkoxy, Alkylalkoxy, Alkenyloxy mit 1 bzw. 2 bis 6 C-Atomen, und
- Alkenyl: einen geradkettigen Alkenylrest mit 2-6 C-Atomen
bedeuten,
enthält,
mit der Maßgabe,
dass das flüssigkästalline Medium keine Verbindung der Formel 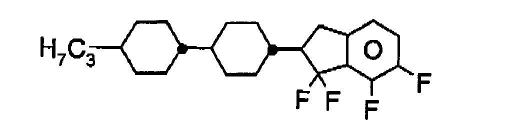 enthält.

Derartige Medien sind insbesondere für elektrooptische Anzeigen mit einer Aktivmatrix-Addressierung basierend auf dem ECB-Effekt sowie für IPS-Anzeigen (In plane switching) zu verwenden.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie Δε von -0,5 bis -5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf. Auch bei Anzeigen, die den sogenannten IPS-Effekt verwenden, können dielektrisch negative Flüsigkristallmedien zum Einsatz kommen.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat. 3.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die bisher bekannten TFT-Anzeigen arbeiten üblicherweise als TN-Zellen mit gekreuzten Polaristoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metali).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen. Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Der Erfindung liegt die Aufgabe zugrunde, MFK-Anzeigen welche auf dem ECB- oder auf dem IPS-Effekt beruhen, bereitzustellen, die die oben angegebenen Nachteile nicht oder nur in geringerem Maße und gleichzeitig sehr hohe spezifische Widerstände aufweisen.

Es wurde nun gefunden, dass diese Aufgabe gelöst werden kann, wenn man in diesen Anzeigeelementen nematische Flüssigkristallmischungen verwendet, die mindestens eine Verbindung der Formel I enthalten.

Gegenstand der Erfindung ist somit ein flüssigkristallines Medium auf der Basis eines Gemisches von polaren Verbindungen mit negativer dielektrischer Anisotropie gemäß Anspruch 1.

Verbindungen der Formel I sind z.B. aus der EP 0 637 585 A1 und WO 03/010120 bekannt. Indanverbindungen sind weiterhin aus den Offenlegungsschriften WO 02/46330, WO 94/18285 und EP 0 647 695 bekannt. Die im Stand der Technik beschriebenen flüssigkristallinen Mischungen sind ausschließlich für ferroelektrische Anwendungen gedacht. Die Verwendung von fluorierten Indanen für ECB- oder IPS-Anzeigen ist nicht bekannt.

Die erfindungsgemäßen Mischungen zeigen sehr günstige Werte für die kapazitive Schwelle, relativ hohe Werte für die Holding Ratio und gleichzeitig eine sehr gute Tieftemperaturstabilität sowie sehr geringe Rotationsviskositäten.

Einige bevorzugte Ausführungsformen werden im folgenden genannt:
a) Flüssigkristallines Medium, welches zusätzlich eine oder mehrere Verbindungen der Formeln IIA und/oder IIB enthält, 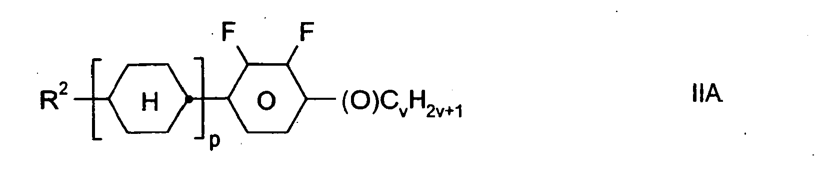 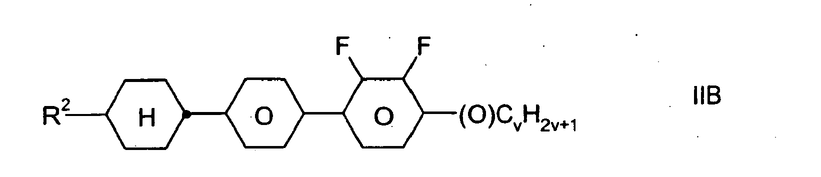 worin
   - R²: die Bedeutung von R¹ hat,
   - p: 1 oder 2, und
   - v: 1 bis 6
   bedeutet.
b) Flüssigkristallines Medium, welches zusätzlich eine oder mehrere Verbindungen der Formel III enthält, 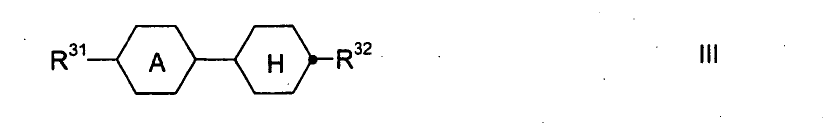 worin
   - R³¹ und R³²: jeweils unabhängig voneinander einen geradkettigen Alkyl-, Alkylalkoxy- oder Alkoxyrest mit bis zu 12 C-Atomen, und 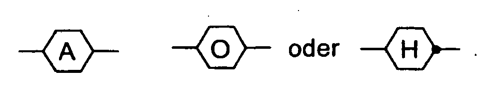
   bedeuten.
c) Flüssigkristallines Medium, welches ein, zwei, drei, vier oder mehr, vorzugsweise ein oder zwei Verbindungen der Formel I enthält.
d) Flüssigkristallines Medium, worin R¹ in Formel I vorzugsweise folgende Bedeutungen hat: geradkettiges Alkyl, Vinyl, 1 E-Alkenyl oder 3-Alkenyl.
   Falls R¹ Alkenyl bedeutet, so ist es vorzugsweise CH₂=CH, CH₃-CH=CH, C₃H₇-CH=CH, CH₂=CH-C₂H₄ oder CH₃-CH=CH-C₂H₄.
   R⁰ bedeutet vorzugsweise H oder geradkettiges Alkyl mit 1 bis 6 C-Atomen, insbesondere Methyl, Ethyl oder Propyl. Ganz besonders bevorzugt bedeutet R⁰ H.
e) Flüssigkristallines Medium, wobei der Anteil an Verbindungen der Formel I im Gesamtgemisch mindestens 5 Gew.%, vorzugsweise mindestens 10 Gew.%, beträgt.
f) Flüssigkristallines Medium, wobei der Anteil an Verbindungen der Formeln IIA und/oder IIB im Gesamtgemisch mindestens 20 Gew.-% beträgt.
g) Flüssigkristallines Medium, wobei der Anteil den Verbindungen der Formel III im Gesamtgemisch mindestens 5 Gew.-% beträgt.
h) Flüssigkristallines Medium, welches mindestens eine Verbindung ausgewählt aus den Teilformeln I1 bis I18 enthält: 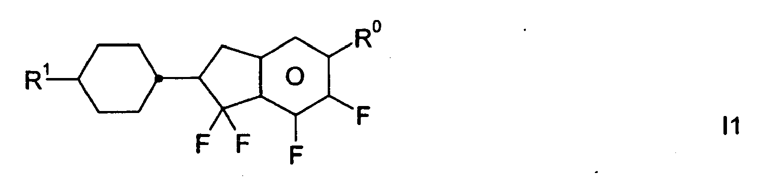 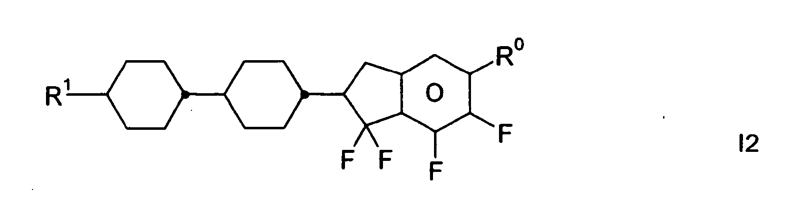 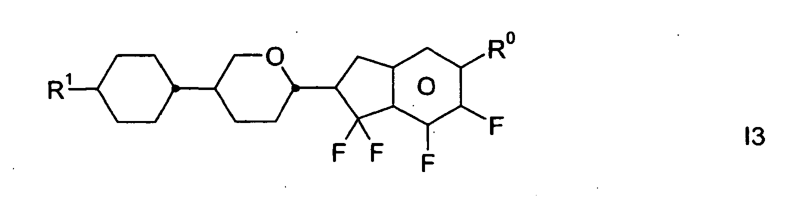 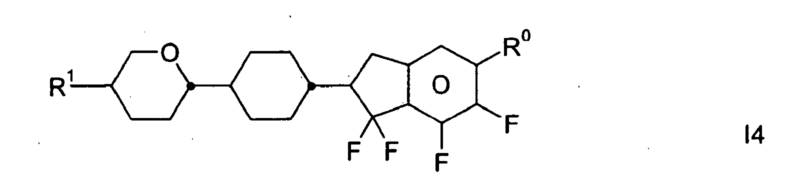 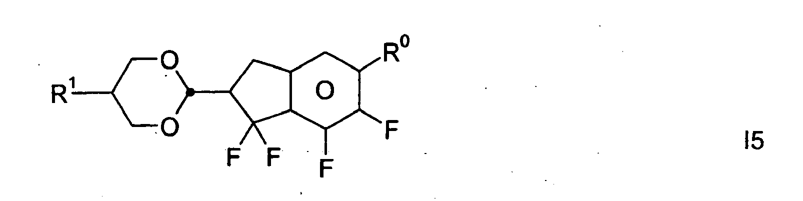 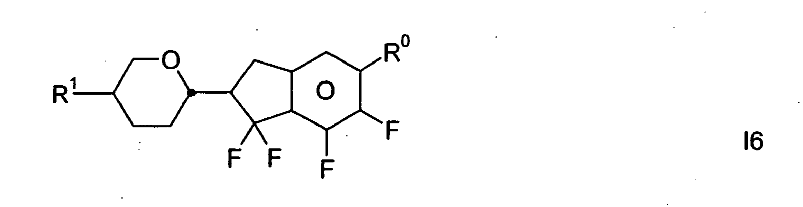 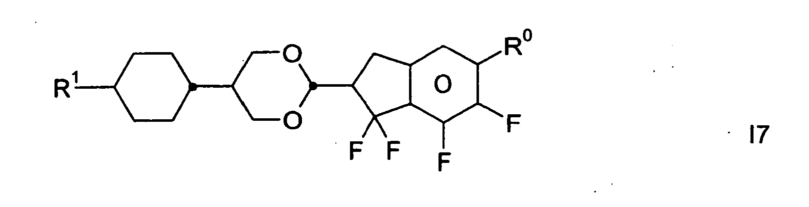 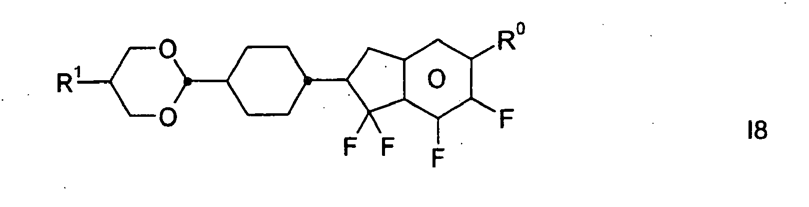 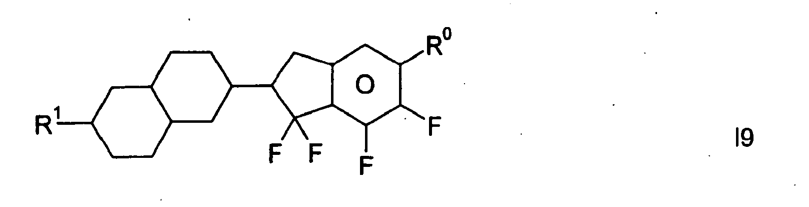 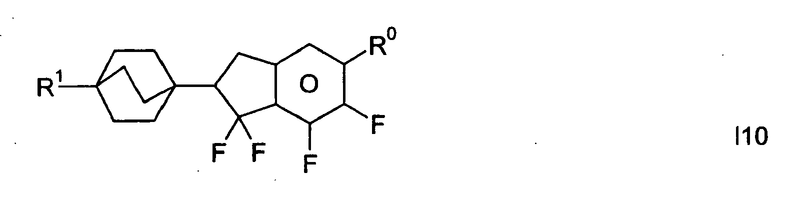 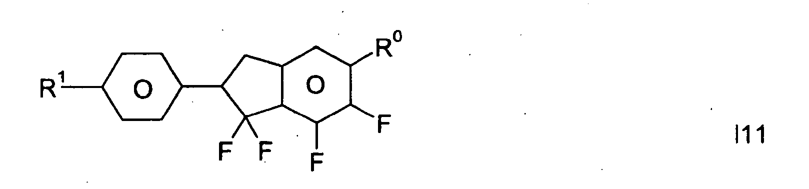 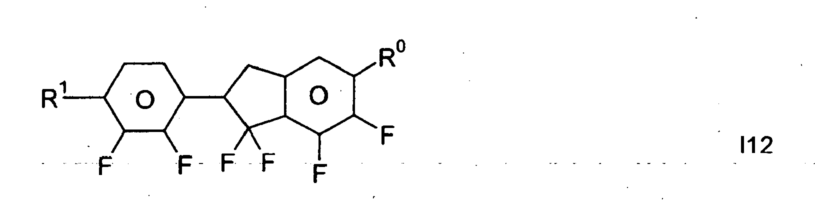 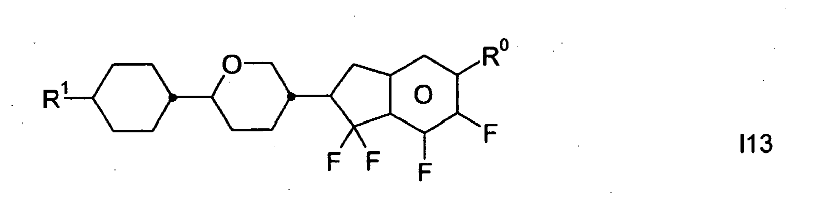 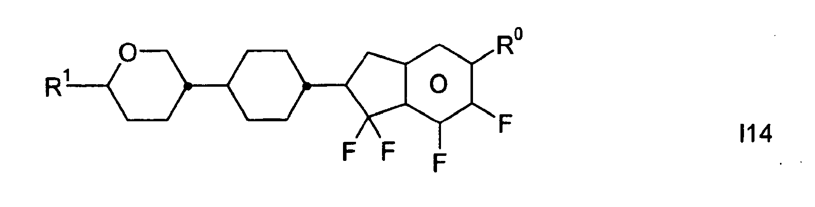 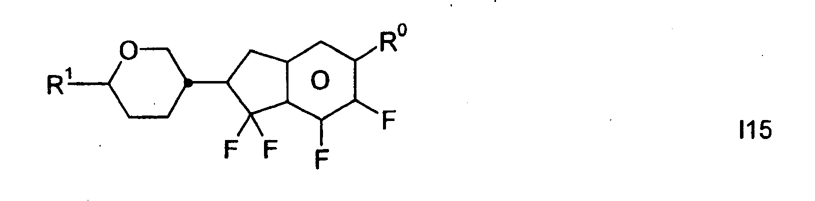 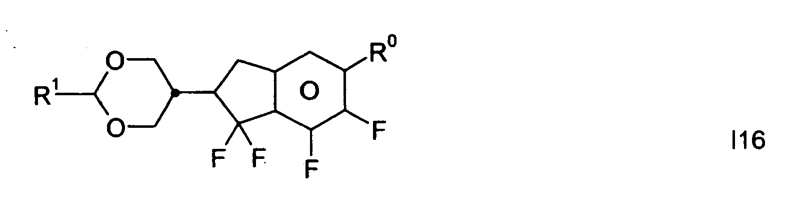 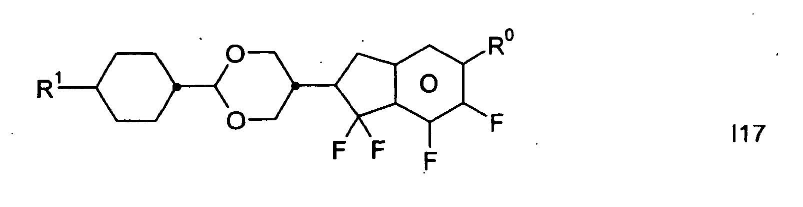 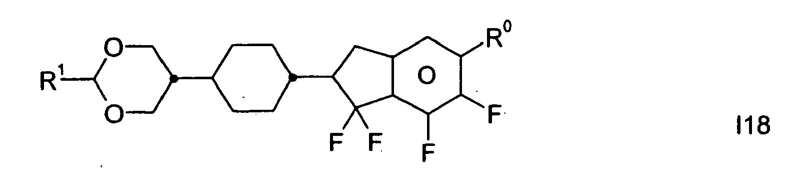
   Besonders bevorzugte Medien enthalten eine oder mehrere Verbindungen ausgewählt aus der Gruppe der Verbindungen der Formeln la bis Ig: 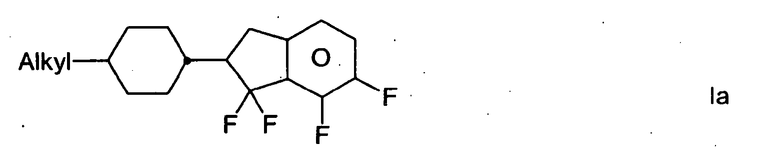 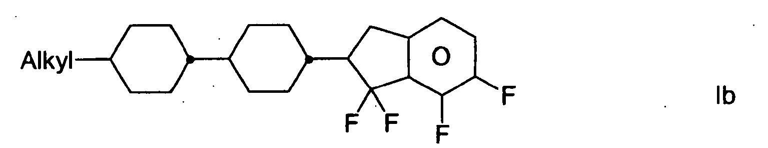 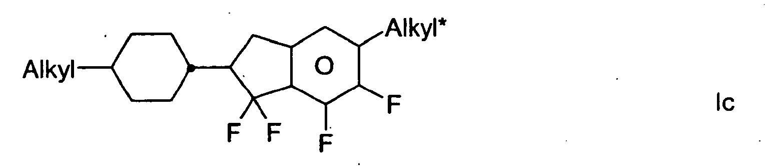 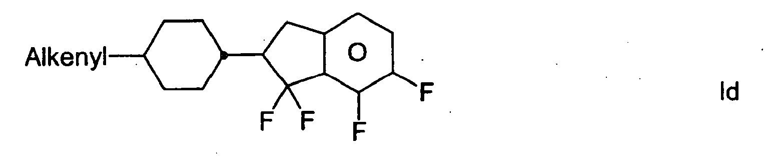 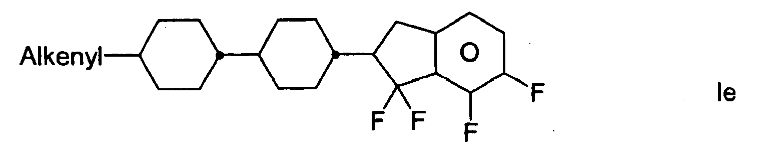 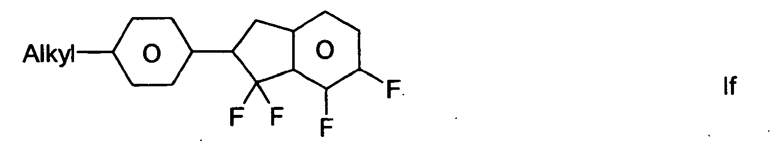 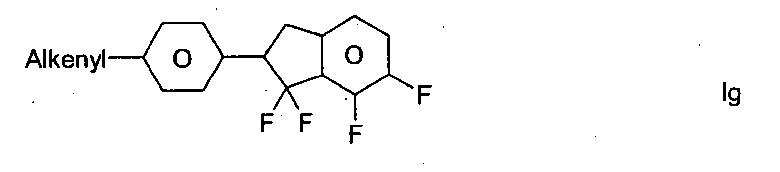
   Insbesondere bevorzugt sind Medien, die mindestens eine Verbindung der Formel la enthalten.
i) Flüssigkristallines Medium, welches zusätzlich eine Verbindung ausgewählt aus den Formeln IIIa bis IIIf enthält: 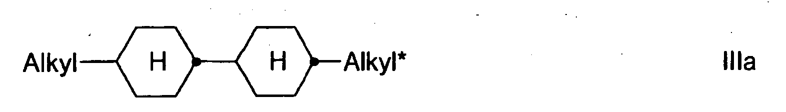 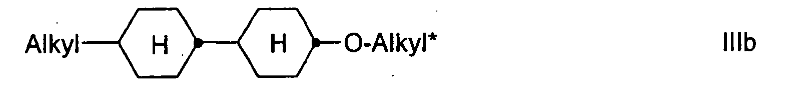 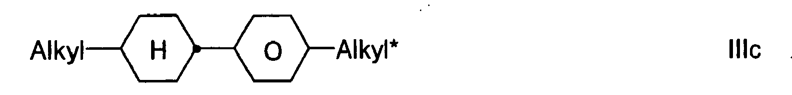 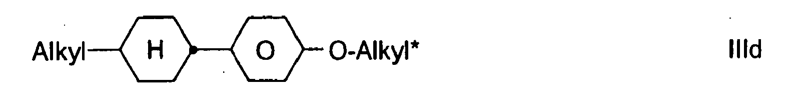 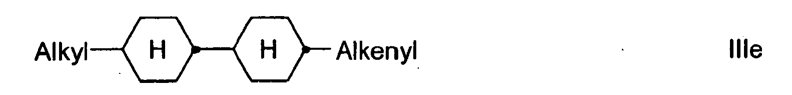 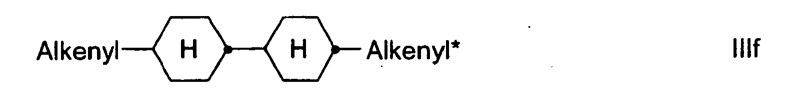 worin
   - Alkyl und Alkyl*: jeweils unabhängig voneinander einen geradkettigen Alkylrest mit 1-6 C-Atomen, und
   - Alkenyl und Alkenyl*: jeweils unabhängig voneinander einen geradkettigen Alkenylrest mit 2-6 C-Atomen

   bedeuten.
   Vorzugsweise enthält das erfindungsgemäße Medium mindestens eine Verbindung der Formel IIIa, Formel IIIb und/oder Formel IIIe.
   Besonders bevorzugte Verbindungen der Formeln IIIe und IIIf werden nachfolgend genannt: 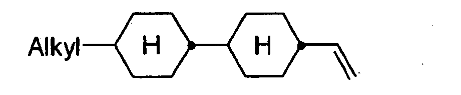 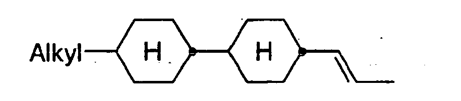 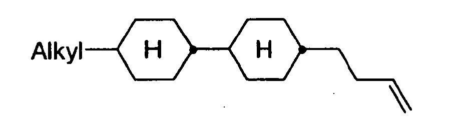 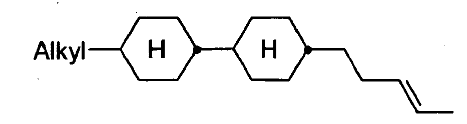 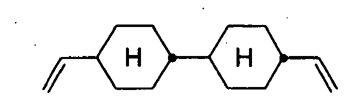 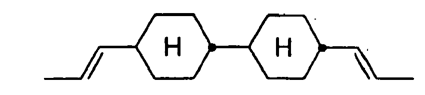 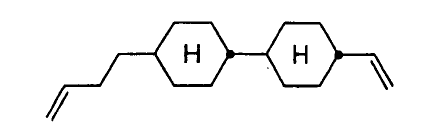 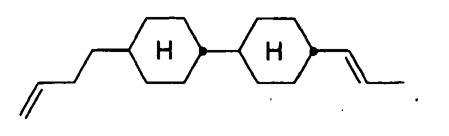 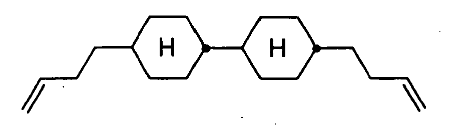
j) Flüssigkristallines Medium, welches im wesentlichen aus:
   - 5-30: Gew.-% einer oder mehrerer Verbindungen der Formel I und
   - 20-70: Gew.-% einer oder mehrerer Verbindungen der Formeln IIA und/oder IIB
   besteht.
k) Flüssigkristallines Medium, welches zusätzlich eine oder mehrere Vierkernverbindungen der Formeln, 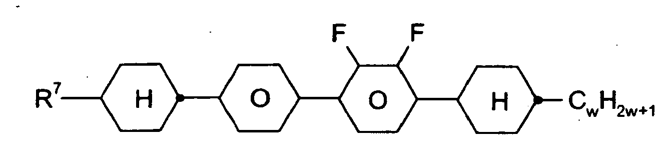 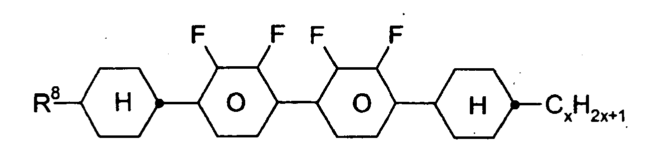 worin
   - R⁷ und R⁸: jeweils unabhängig voneinander eine der in Anspruch 1 für R¹ angegebenen Bedeutung haben, und
   - w und x: jeweils unabhängig voneinander 1 bis 6
bedeuten,
enthält.

Ein weiterer Gegenstand der Erfindung ist eine elektrooptische Anzeige mit einer Aktivmatrix-Adressierung basierend auf dem ECB-Effekt, **dadurch gekennzeichnet, dass** sie als Dielektrikum ein flüssigkristallines Medium nach einem der Ansprüche 1 bis 12 enthält.

Vorzugsweise weist die Flüssigkristallmischung einen nematischen Phasenbereich von mindestens 60 K und eine Fließviskosität ν₂₀ von maximal 30 mm². s⁻¹ bei 20 °C auf.

Die erfindungsgemäße Flüssigkristallmischung weist ein Δε von etwa -0,5 bis -8,0, insbesondere von etwa -3,0 bis -6,0 auf, wobei Δε die dielektrische Anisotropie bedeutet. Die Rotationsviskosität γ₁ ist vorzugsweise < 150 mPa·s, insbesondere < 140 mPa·s.

Die Doppelbrechung Δn in der Flüssigkristallmischung liegt, in der Regel, zwischen 0,07 und 0,16, vorzugsweise zwischen 0,08 und 0,11.

Die erfindungsgemäßen Mischungen sind für alle VA-TFT-Anwendungen geeignet, wie z.B. MVA, PVA, ASV. Weiterhin sind sie für IPS- und PALC-Anwendungen mit negativem Δε geeignet.

Die einzelnen Komponenten der Formeln I, IIA, IIB und III der erfindungsgemäßen Flüssigkristallphasen sind entweder bekannt oder ihre Herstellungsweisen sind für den einschlägigen Fachmann aus dem Stand der Technik ohne weiteres abzuleiten, da sie auf in der Literatur beschriebenen Standardverfahren basieren.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,3. Sie enthält bevorzugt Verbindungen der Formeln I, IIA und/oder IIB.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm^{2.} s⁻¹, vorzugsweise nicht mehr als 25 mm^{2.} s⁻¹, bei 20 °C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm^{2.} s⁻¹, bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen 4 bis 15, insbesondere 5 bis 12, Verbindungen der Formeln I, IIA und/oder IIB und optional III.

Neben Verbindungen der Formeln I, IIA und/oder IIB und III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbene, Benzylphenylether, Tolane und substituierten Zimtsäuren.

Die wichtigsten als Bestandteile derartiger Flüssigkristallphasen in Frage kommenden Verbindungen lassen sich durch die Formel IV charakterisieren,

R⁹-L-G-E-R¹⁰ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH-CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂ | -OCH₂- |
| | -(CH₂)₄- | -(CF₂)₃O- |

oder eine C-C-Einfachbindung, Q Halogen, vorzugsweise Chlor, oder -CN, und R⁹ und R¹⁰ jeweils Alkyl, Alkenyl, Alkoxy, Alkanoyloxy oder Alkoxycarbonyloxy mit bis zu 18, vorzugsweise bis zu 8 Kohlenstoffatomen, oder einer dieser Reste auch CN, NC, NO₂, NCS, CF₃, OCF₃, F, Cl oder Br bedeuten.

Bei den meisten dieser Verbindungen sind R⁹ und R¹⁰ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße VA-, IPS- oder PALC-Mischung auch Verbindungen enthalten kann, worin beispielsweise H, N, O, Cl, F durch die entsprechenden Isotope ersetzt sind.

Der Aufbau der erfindungsgemäßen Flüssigkristallanzeigen entspricht der üblichen Geometrie, wie sie z.B. in EP-OS 0 240 379, beschrieben wird.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Vorzugsweise enthalten die erfindungsgemäßen Mischungen neben den Verbindungen der Formeln I eine oder mehrere Verbindungen der nachfolgend genannten Verbindungen.

Folgende Abkürzungen werden verwendet:
(n, m = 1-6; z = 1-6)

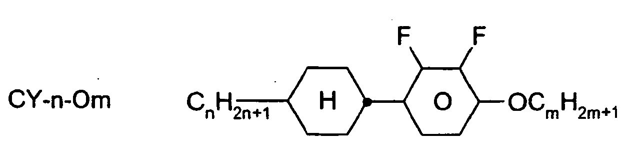

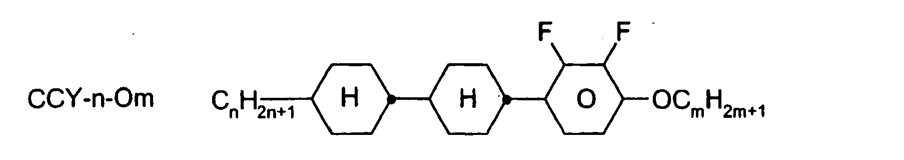

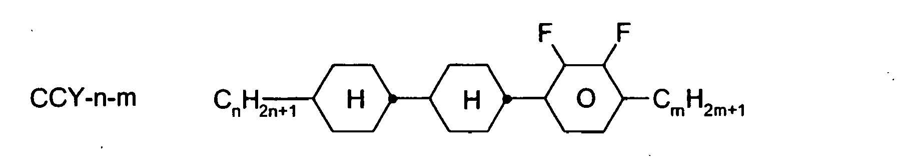

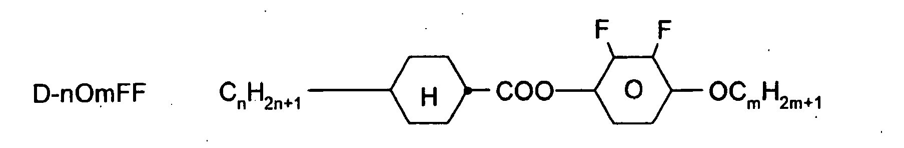

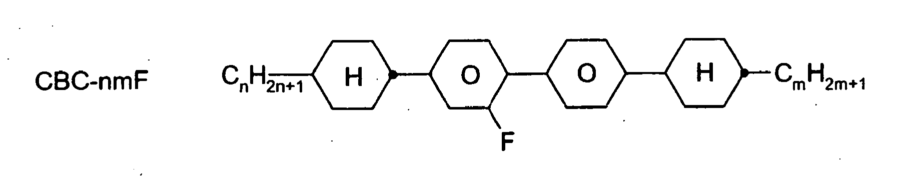

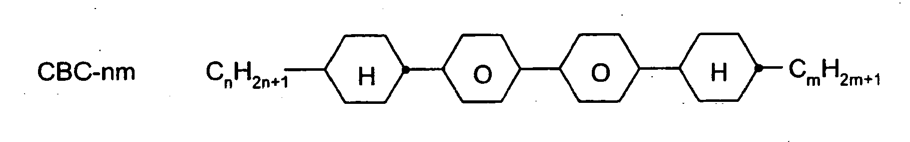

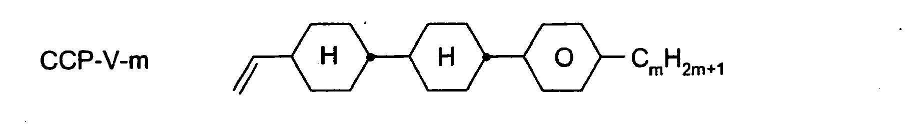

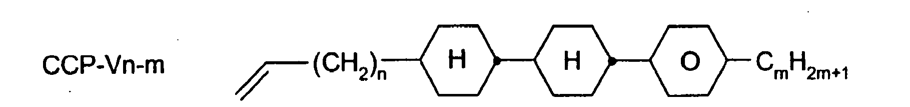

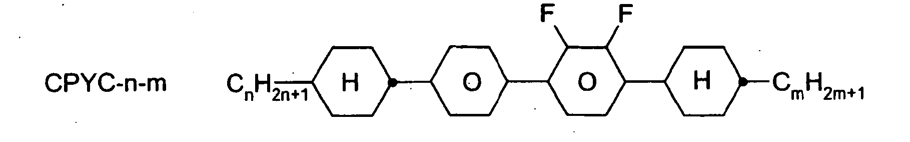

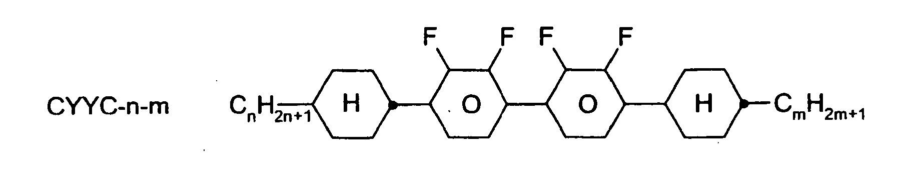

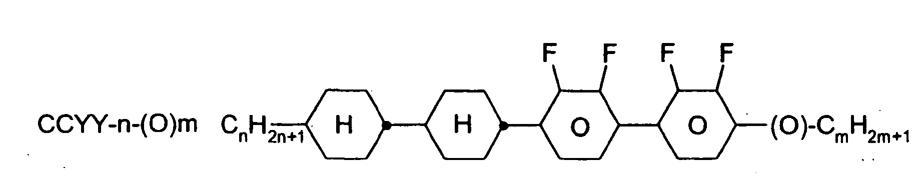

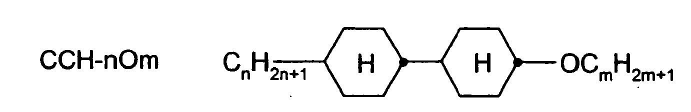

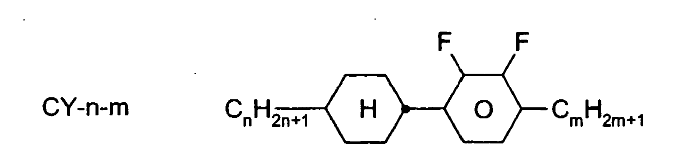

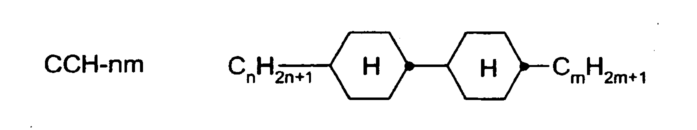

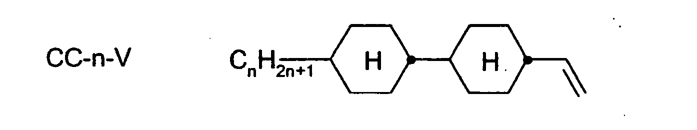

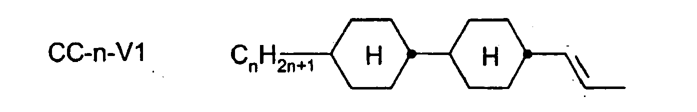

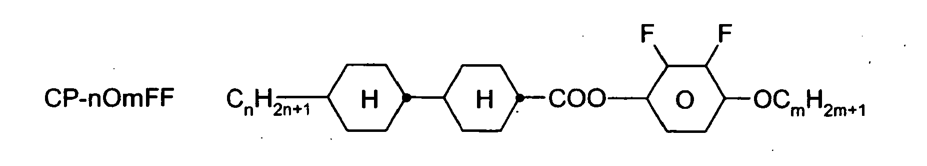

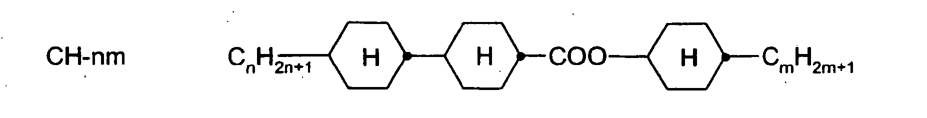

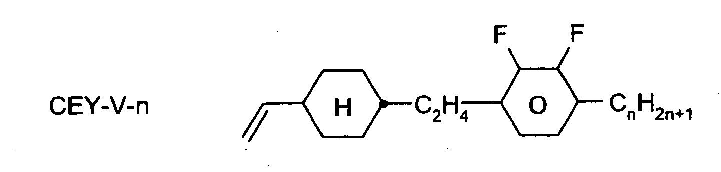

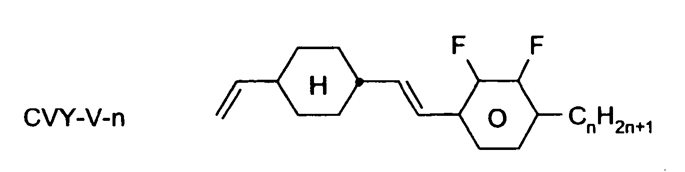

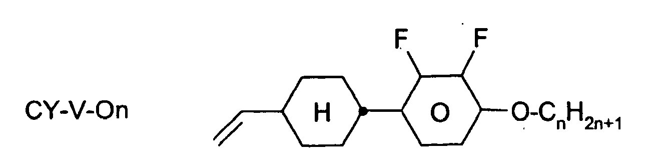

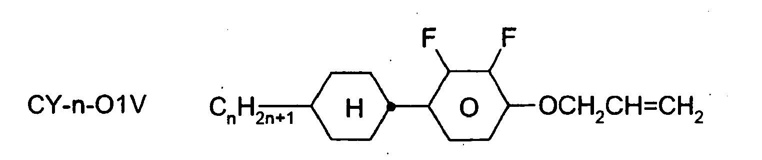

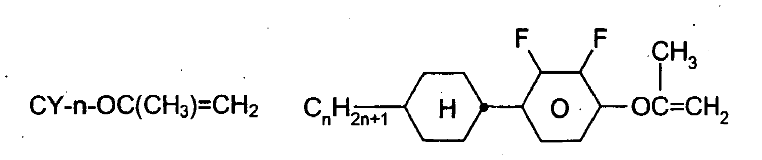

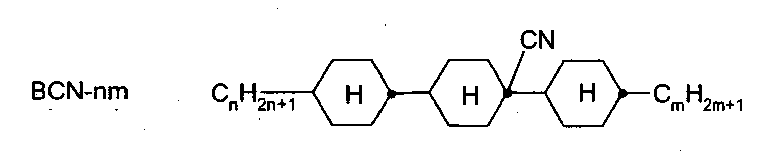

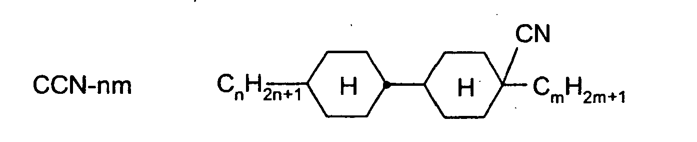

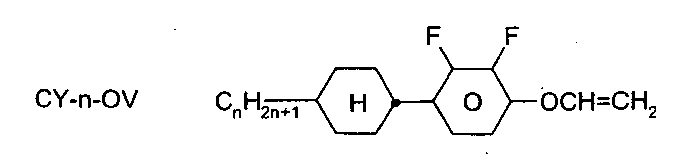

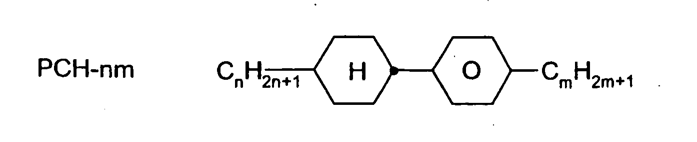

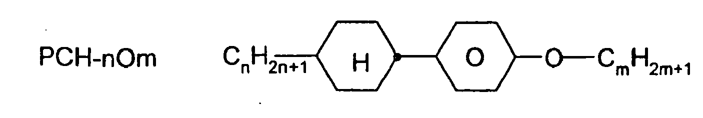

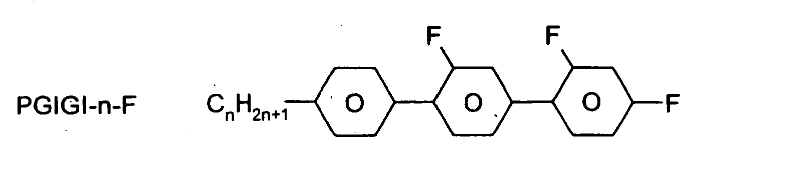

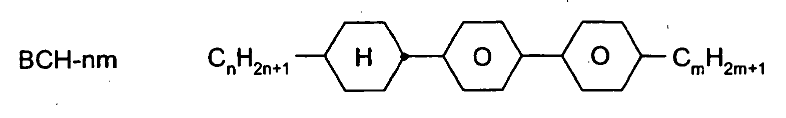

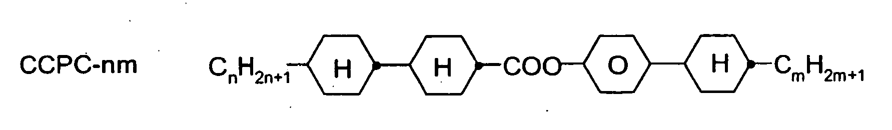

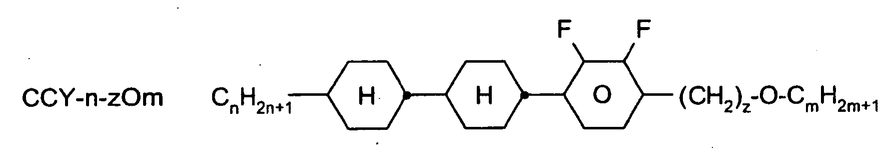

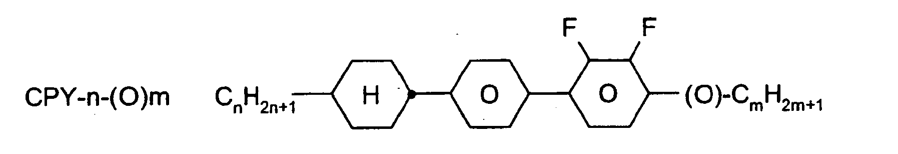

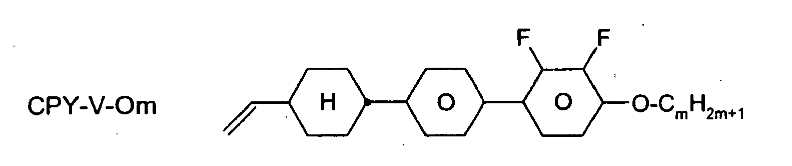

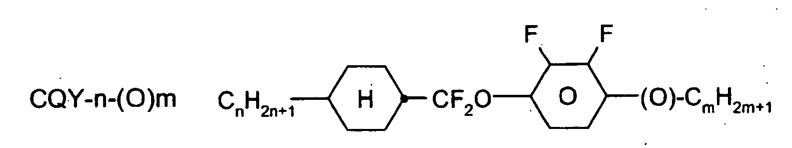

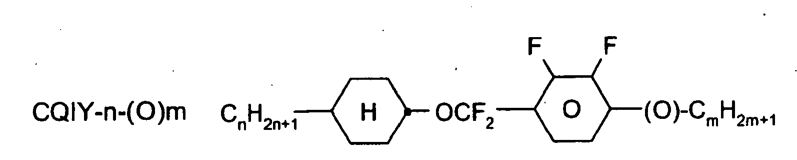

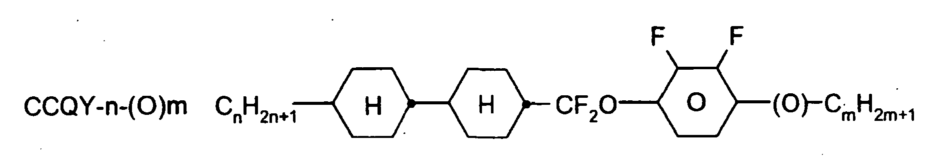

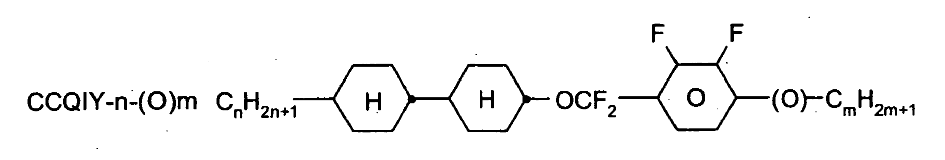

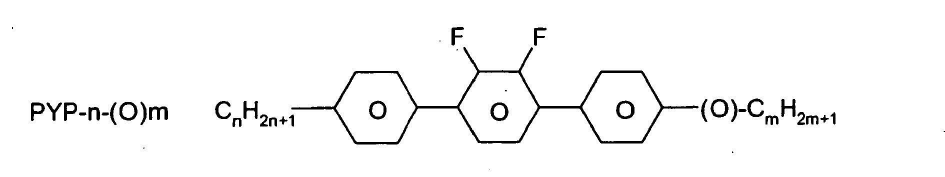

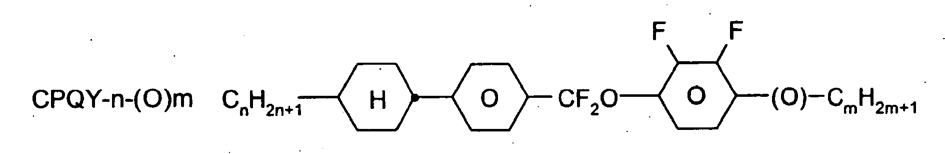

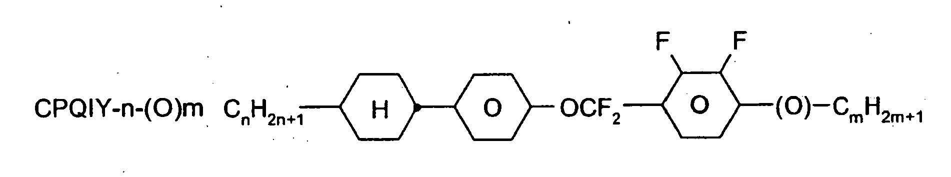

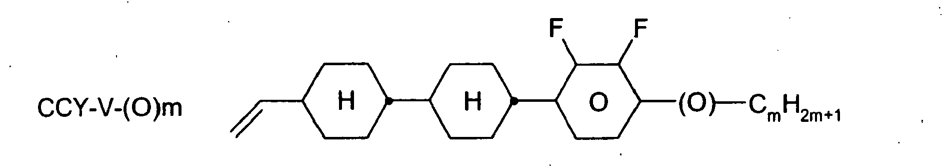

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Die Dielektrika können auch weitere, dem Fachmann bekannte und in der Literatur beschriebene Zusätze, wie z. B. UV-Absorber, Antioxidantien, Radikalfänger, enthalten. Beispielsweise können 0-15 % pleochroitische Farbstoffe, Stabilisatoren oder chirale Dotierstoffe zugesetzt werden.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

In der Tabelle A werden mögliche Dotierstoffe angegeben, die den erfindungsgemäßen Mischungen zugesetzt werden können. Sofern die erfindungsgemäßen Mischungen einen Dotierstoff enthalten, wird er in der Regel in Mengen von 0,01 bis 4,0 Gew.%, vorzugsweise 0,1 bis 1,0 Gew.%, zugesetzt.

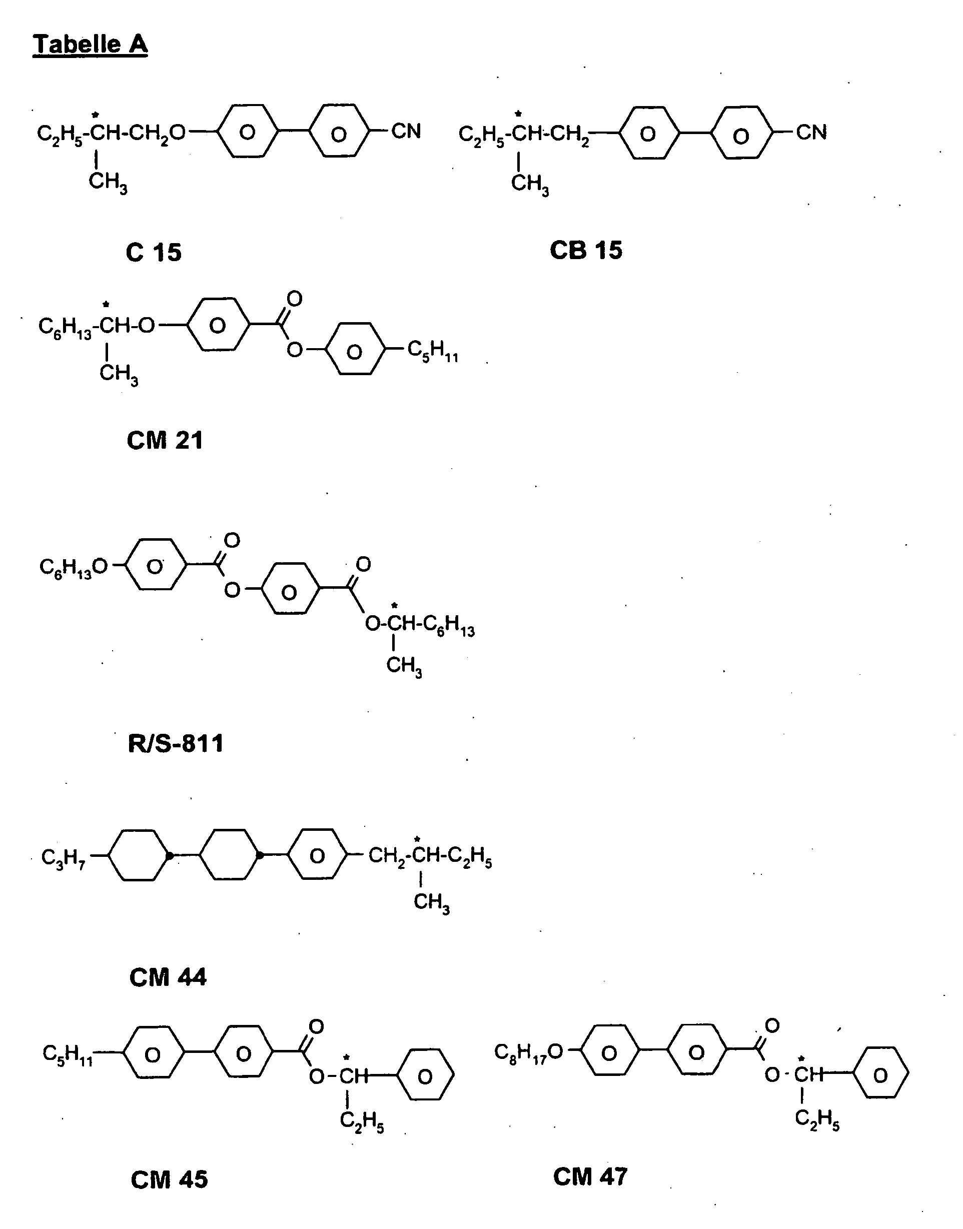

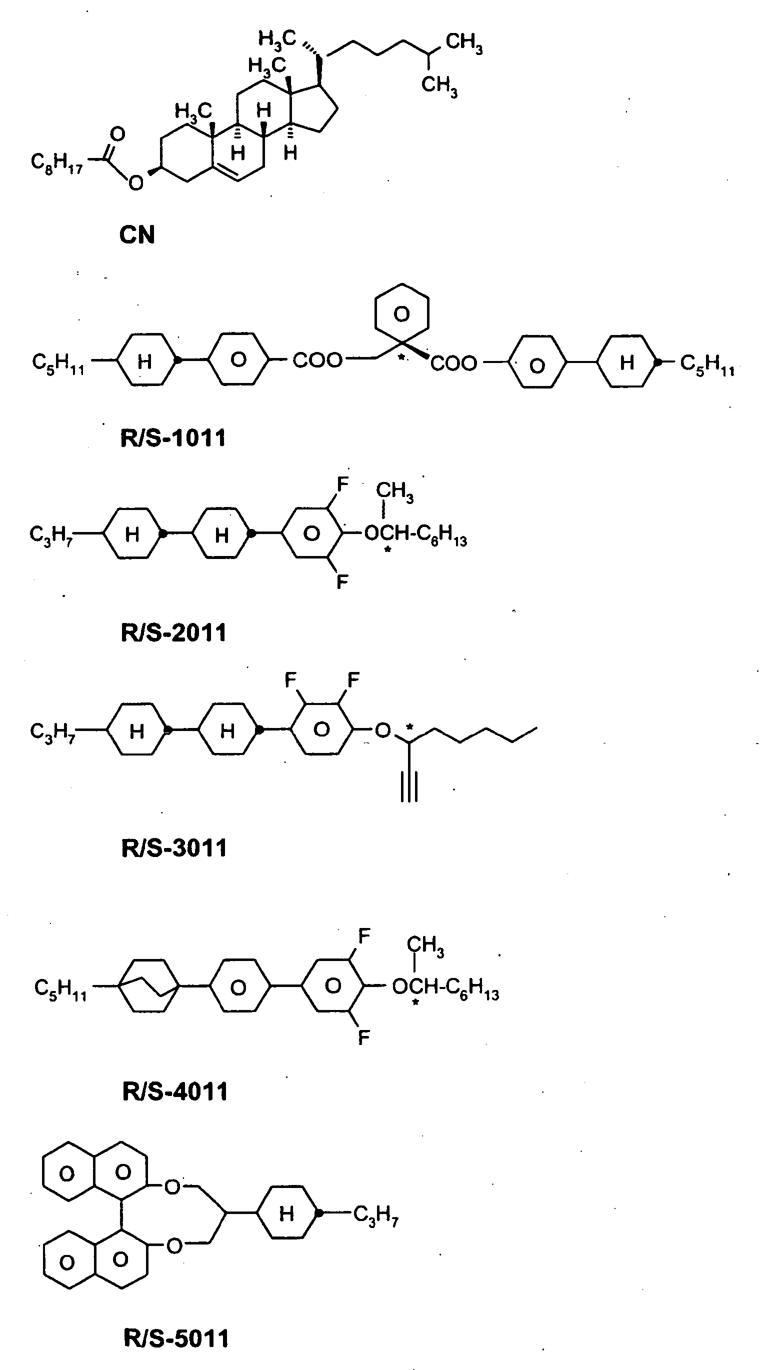

Stabilisatoren, die beispielsweise den erfindungsgemäßen Mischungen zugesetzt werden können, werden nachfolgend in Tabelle B genannt.

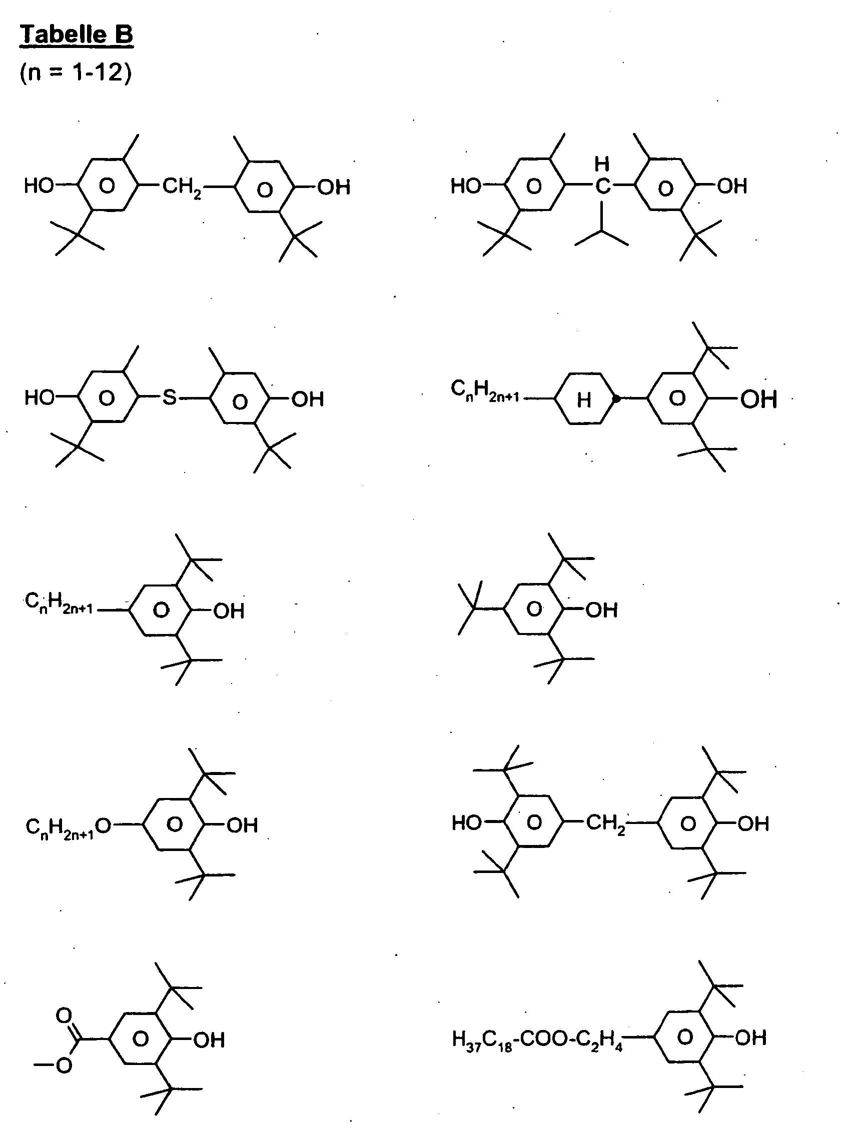

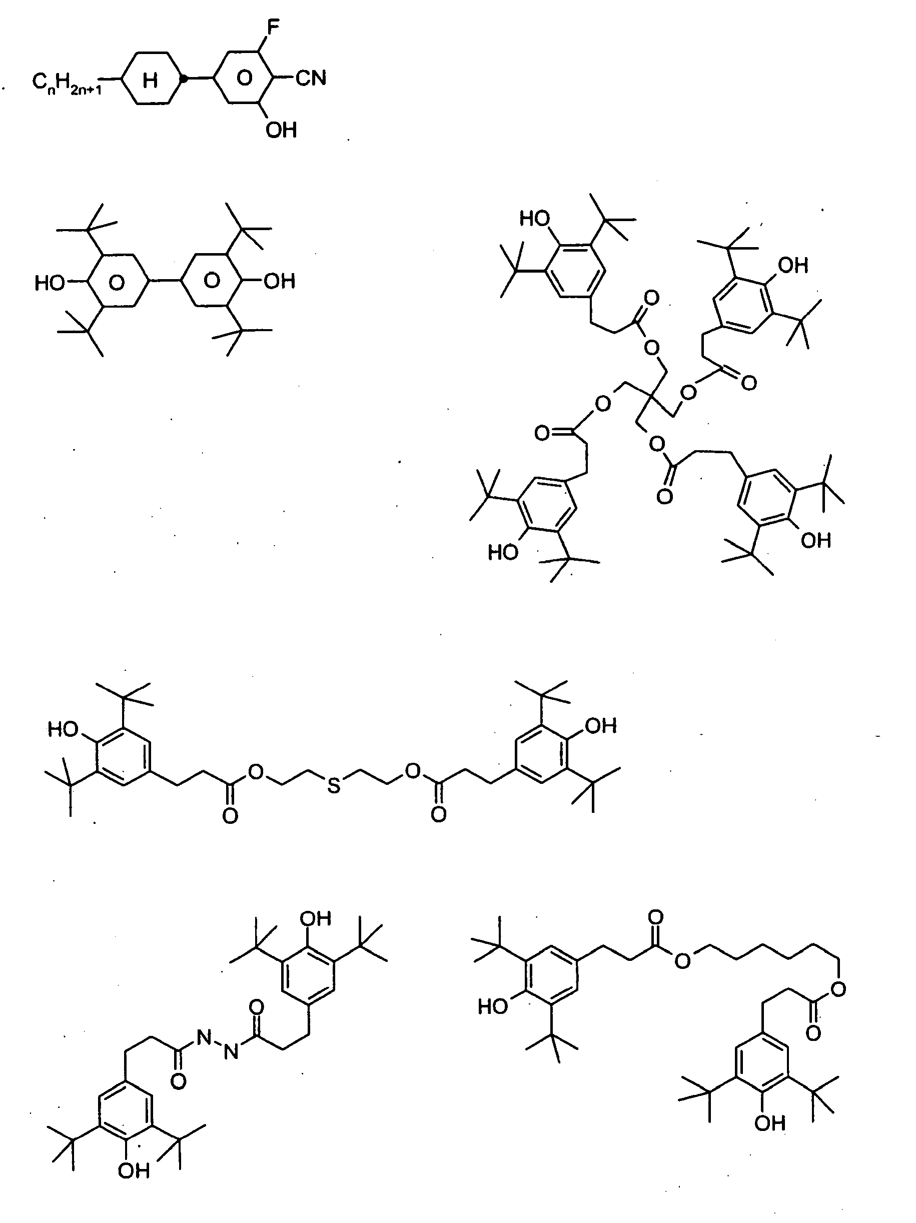

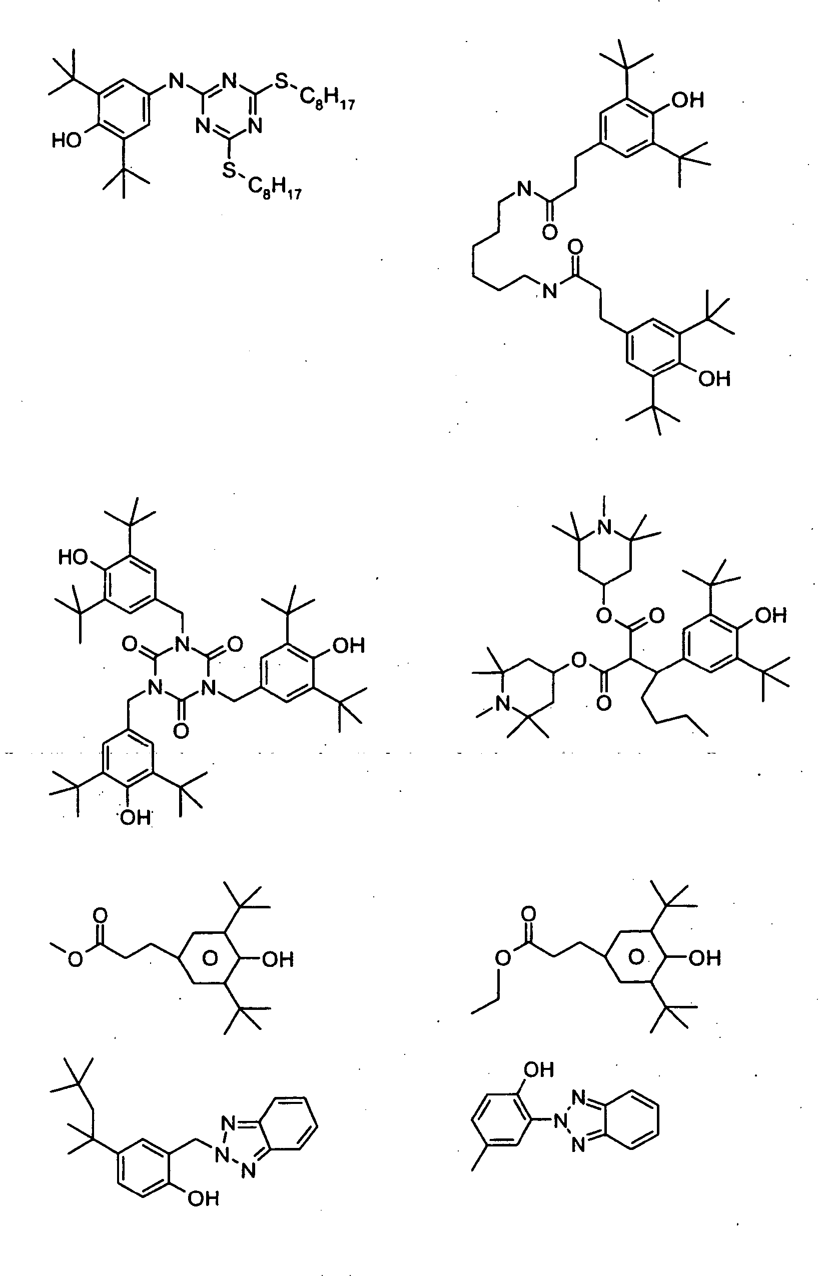

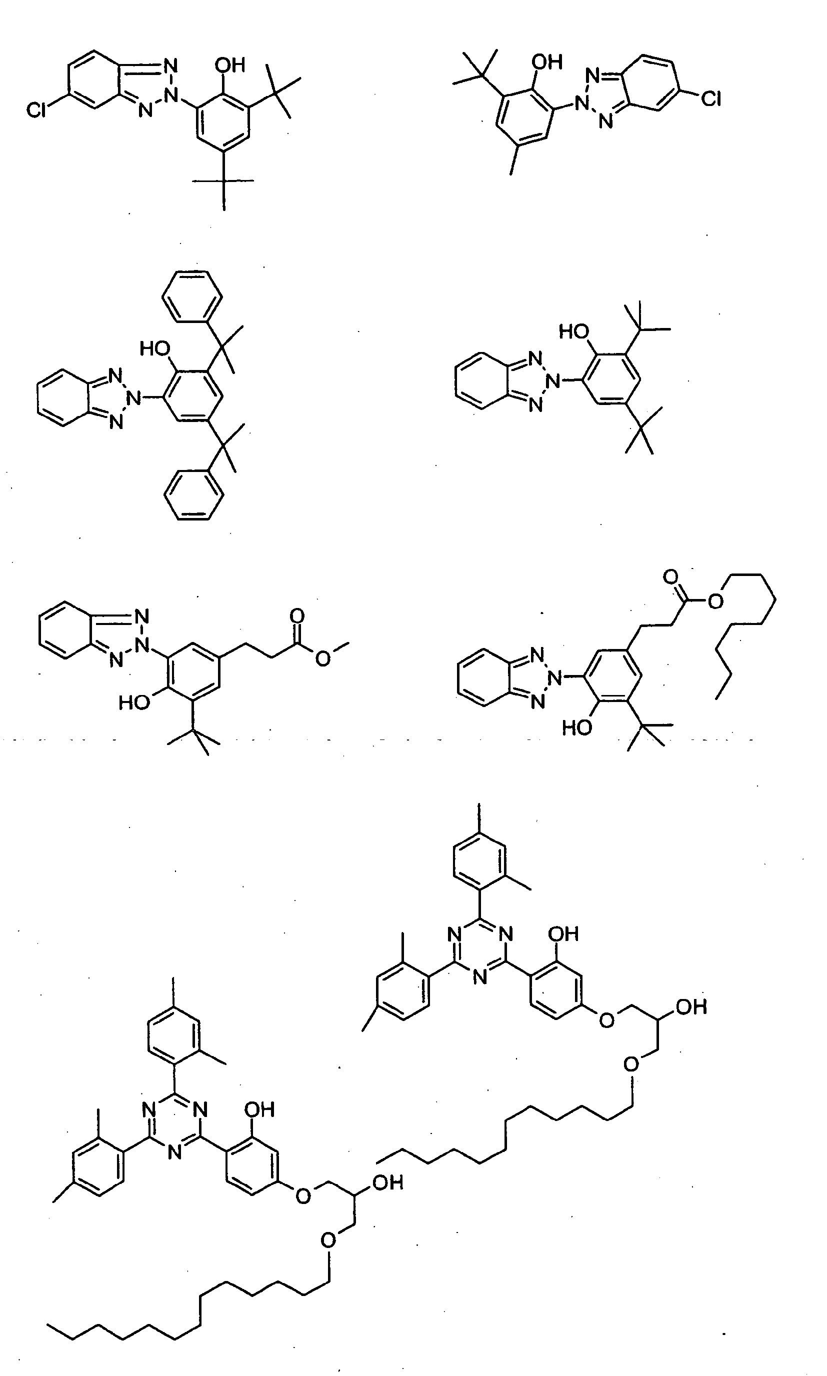

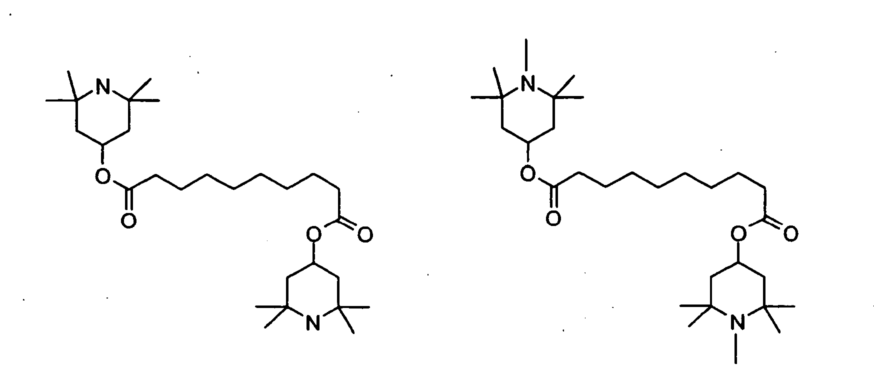

Die folgenden Beispiele sollen die Erfindung erläutern, ohne sie zu begrenzen. Vor- und nachstehend bedeuten
- Vₒ: Schwellenspannung, kapazitiv [V] bei 20°C
- Δn: die optische Anisotropie gemessen bei 20 °C und 589 nm
- Δε: die dielektrische Anisotropie bei 20°C und 1 kHz
- cp.: Klärpunkt [°C]
- γ₁: Rotationsviskosität gemessen bei 20°C [mPa.s]
- LTS: Low temperature stability, bestimmt in Testzellen

Die zur Messung der Schwellenspannung verwendete Anzeige weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homöotrope Orientierung der Flüssigkristalle bewirken.

### Mischungsbeispiele

### Beispiel 1

| | | | |
|---|---|---|---|
| CY-3-O4 | 4,00 % | Klärpunkt [°C]: | 85,0 |
| CCY-3-O3 | 8,00 % | Δn [589 nm, 20 °C]: | 0,1096 |
| CPY-2-O2 | 9,00 % | εᵢᵢ [1 kHz, 20°C]: | 4,0 |
| CPY-3-O2 | 9,00 % | Δε [1 kHz, 20 °C]: | -3,5 |
| CC-4-V | 18,00 % | γ₁ [mPa·s, 20 °C]: | 116 |
| CC-3-V1 | 10,00 % | V₀ [V] | 2,10 |
| CCP-V-1 | 7,00 % | | |
| PCH-301 | 3,00 % | | |
| PYP-2-3 | 4,00 % | | |
| PYP-2-4 | 8,00 % | | |
| 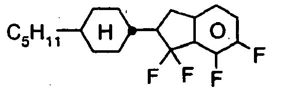 | 10,00 % | | |
| 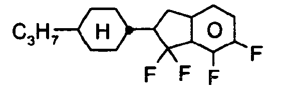 | 10,00 % | | |

### Beispiel 2

| | | | |
|---|---|---|---|
| CCY-3-O3 | 7,00 % | Klärpunkt [°C]: | 94,5 |
| CPY-2-O2 | 12,00 % | Δn [589 nm, 20 °C]: | 0,1285 |
| CPY-3-O2 | 12,00 % | ε_{II} [1 kHz, 20 °C]: | 4,0 |
| PYP-2-3 | 8,00 % | Δε [1 kHz, 20 °C]: | -3,7 |
| PYP-2-4 | 12,00 % | γ₁ [mPa·s, 20 °C]: | 155 |
| CC-5-V | 9,00 % | V₀ [V] | 2,15 |
| CC-4-V | 9,00 % | | |
| CC-3-V1 | 9,00 % | | |
| CCP-V-1 | 3,00 % | | |
| PCH-301 | 2,00 % | | |
| 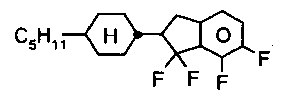 | 10,00 % | | |
| 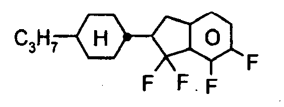 | 7,00 % | | |

### Beispiel 3

| | | | |
|---|---|---|---|
| CY-3-O4 | 12,00 % | Klärpunkt [°C]: | 85,0 |
| CCY-3-O3 | 10,00 % | Δn [589 nm, 20 °C]: | 0,105 |
| CPY-2-O2 | 12,00 % | εᵢᵢ [1 kHz, 20 °C]: | 3,9 |
| CPY-3-O2 | 12,00 % | Δε [1 kHz, 20 °C]: | -3,8 |
| CC-5-V | 17,00 % | γ₁ [mPa·s, 20 °C]: | 141 |
| CC-3-V1 | 11,00 % | V₀ [V] | 2,07 |
| CCH-35 | 5,00 % | | |
| PYP-2-4 | 11,00 % | | |
| 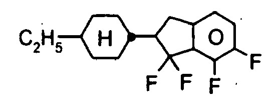 | 4,00 % | | |
| 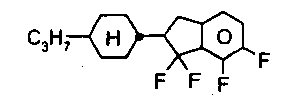 | 6,00 % | | |

### Beispiel 4

| | | | |
|---|---|---|---|
| CCY-3-O3 | 4,00 % | Klärpunkt [°C]: | 93,5 |
| CPY-2-02 | 12,00 % | Δn [589 nm, 20 °C]: | 0,1297 |
| CPY-3-O2 | 12,00 % | εᵢᵢ [1 kHz, 20 °C]: | 4,0 |
| PYP-2-3 | 9,00 % | Δε [1 kHz, 20 °C]: | -3,5 |
| PYP-2-4 | 13,00 % | γ₁ [mPa·s, 20 °C]: | 144 |
| CC-5-V | 7,00 % | V₀ [V] | 2,17 |
| CC-4-V | 8,00 % | | |
| CC-3-V1 | 6,00 % | | |
| CCP-V-1 | 4,00 % | | |
| CCH-34 | 4,00 % | | |
| CCH-35 | 4,00 % | | |
| 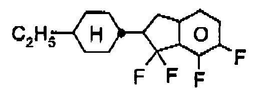 | 6,00 % | | |
| 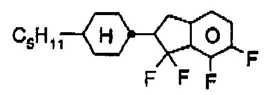 | 6,00 % | | |
| 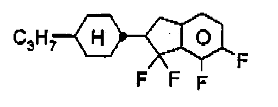 | 5,00 % | | |

### Beispiel 5

| | | | |
|---|---|---|---|
| CY-3-04 | 18,0 % | Klärpunkt [°C]; | 79,5 |
| CY-5-O2 | 8,0 % | Δn [589,nm, 20 °C]: | +0,1097 |
| CCY-3-O3 | 12,0 % | εᵢᵢ [1 kHz, 20 °C]: | 4,2 |
| CCY-4-O2 | 4,0 % | Δε [1 kHz, 20°C]: | -5,2 |
| CPY-2-O2 | 12,0 % | γ₁ [mPa·s, 20 °C]: | 180 |
| CPY-3-O2 | 12,0 % | γ₁/Δn² [Pa·s]: | 14,9 |
| CC-3-V1 | 8,0 % | V₀ [V] | 1,77 |
| CC-5-V | 12,0 % | LTS bei -20 °C: | nematisch > 1000 h |
| PYP-2-3 | 7,0 % | | |
| 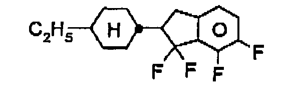 | 7,0 % | | |

### Beispiel 6

| | | | |
|---|---|---|---|
| CY-3-O4 | 10,0 % | Klärpunkt [°C]: | 81,0 |
| CCY-3-O3 | 2,0 % | Δn [589,3 nm, 20 °C]: | +0,1280 |
| CPY-2-O2 | 12,0 % | Δε [1 kHz, 20 °C]: | -3,6 |
| CPY-3-O2 | 12,0 % | γ₁ [mPa·s, 20 °C]: | 135 |
| CC-5-V | 20,0 % | V₀ [V] | 2,15 |
| CC-3-V1 | 11,0 % | | |
| BCH-32 | 2,0 % | | |
| PYP-2-3 | 10,0 % | | |
| PYP-2-4 | 11,0 % | | |
| 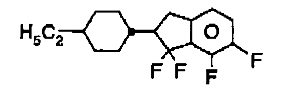 | 10,0 % | | |

## Patentansprüche

1. Flüssigkristallines Medium auf der Basis eines Gemisches von polaren Verbindungen mit negativer dielektrischer Anisotropie, **dadurch gekennzeichnet, dass** es mindestens eine Verbindung der Formel I, 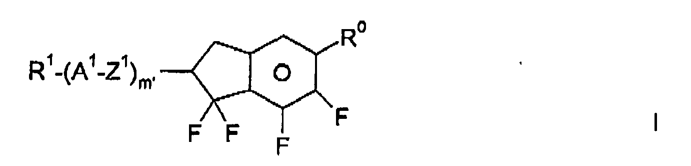 und eine oder mehrere Verbindungen der Formeln 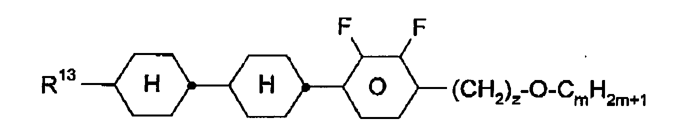 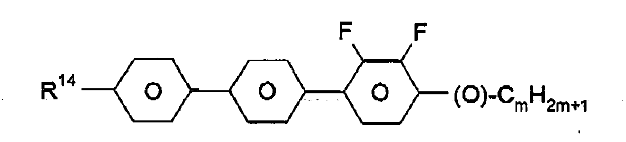 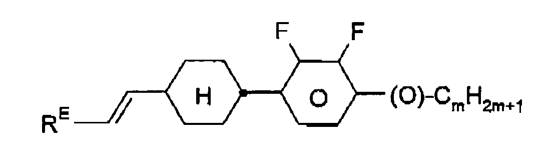 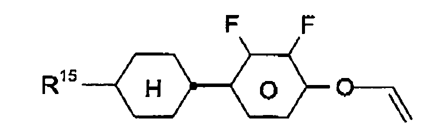 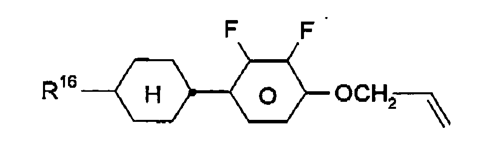 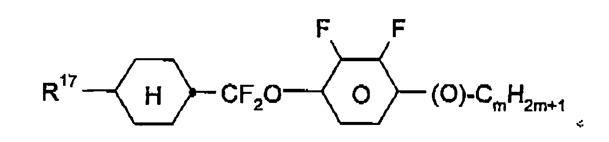 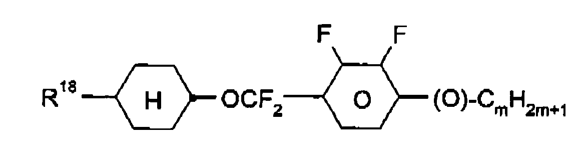 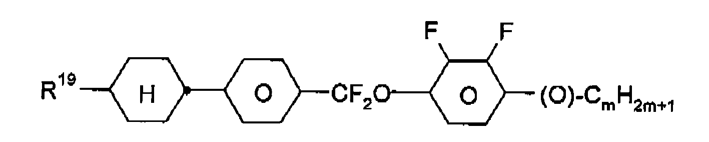 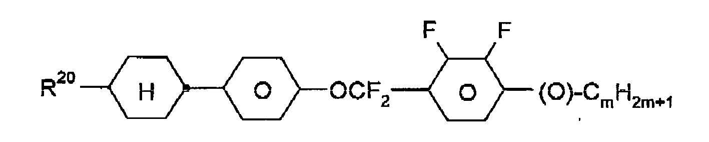 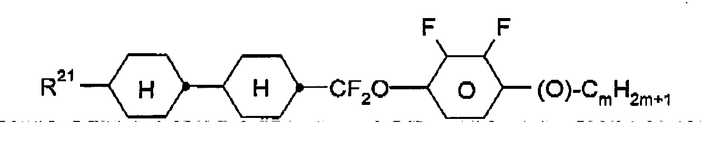 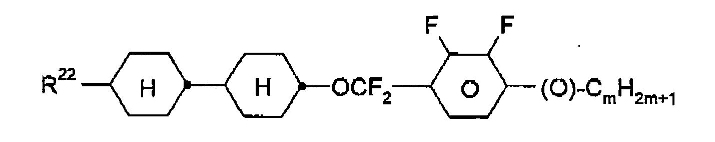 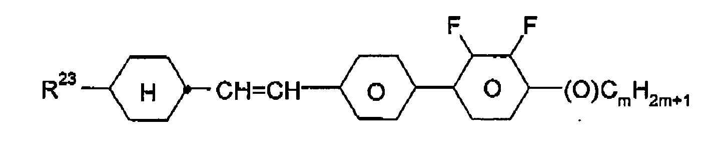 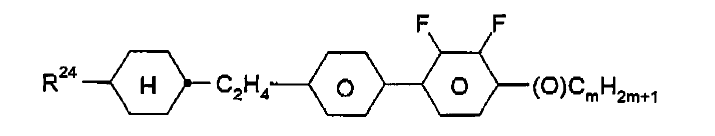 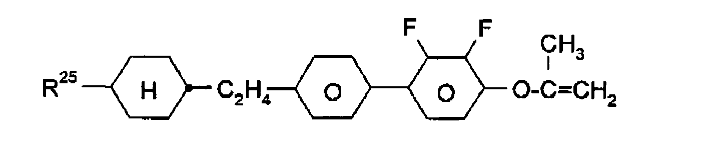 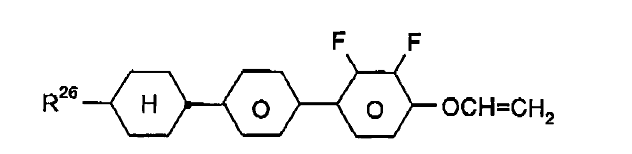 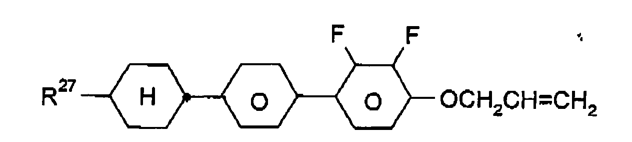 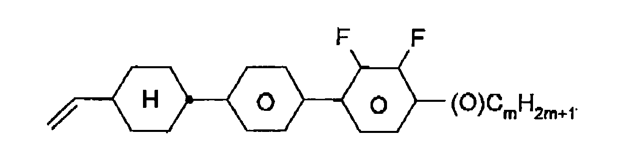 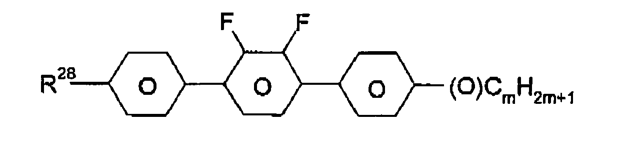 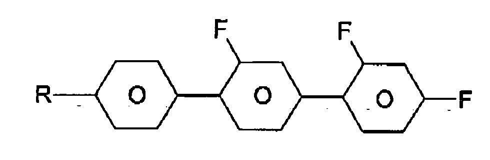 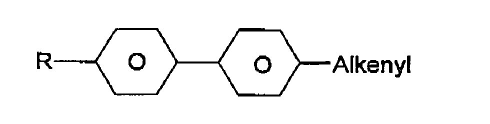 worin
R⁰ und R¹ jeweils unabhängig voneinander H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 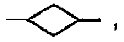 -C≡C-, -OC-O- oder -O-COso ersetzt sein können, dass O-Atome nicht direkt miteinander verknüpft sind,
A¹
a) einen 1,4-Cyclohexenylen- oder 1,4-Cyclohexylenrest, worin eine oder zwei nicht benachbarte CH₂-Gruppen durch -O- oder -S- ersetzt sein können,
c) einen 1,4-Phenylenrest, worin eine oder zwei CH-Gruppen durch N ersetzt sein können,
c) einen Rest aus der Gruppe Piperidin-1,4-diyl-, 1,4-Bicyclo[2,2,2]-octylen-, Naphthalin-2,6-diyl, Decahydronaphthalin-2,6-diyl, 1,2,3,4-Tetrahydronaphthalin-2,6-diyl, Phenanthren-2,7-diyl, Fluoren-2,7-diyl,
wobei die Reste a), b) und c) ein oder mehrfach durch Halogen- atome substituiert sein können,
Z¹ -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CH-, -C≡C- oder eine Einfachbindung,
m' 0, 1 oder 2,
R¹³-R²⁸ jeweils unabhängig voneinander, die für R¹ angegebenen Bedeutungen haben,
z und m jeweils unabhängig voneinander 1-6,
R^{E} H, CH₃, C₂H₅ oder n-C₃H₇,
R Alkyl, Alkenyl, Alkoxy, Alkylalkoxy, Alkenyloxy mit 1 bzw. 2 bis 6 C-Atomen, und
Alkenyl einen geradkettigen Alkenylrest mit 2-6 C-Atomen
bedeuten,
enthält,
mit der Maßgabe,
dass das flüssigkristalline Medium keine Verbindung der Formel 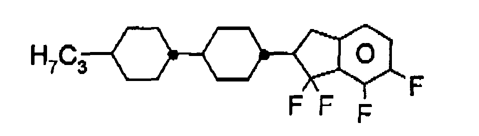 enthält.

2. Flüssigkristallines Medium nach Anspruch 1, **dadurch gekennzeichnet, dass** es mindestens eine Verbindung ausgewählt aus den Formeln I1 bis I18, 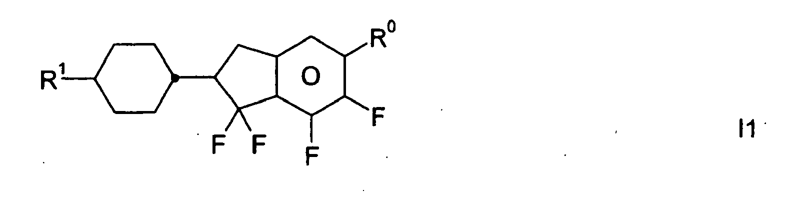 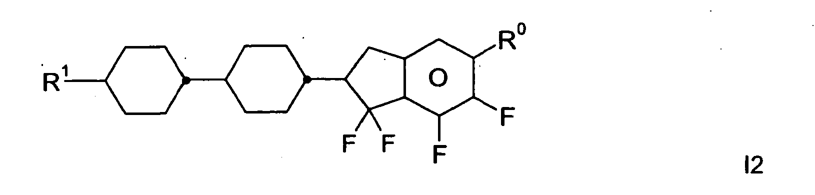 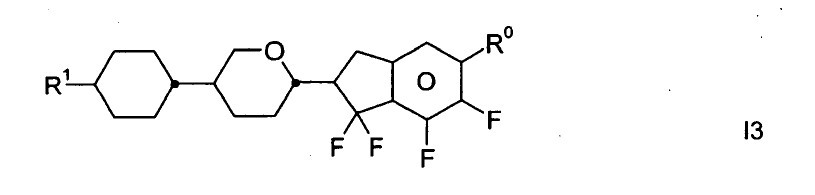 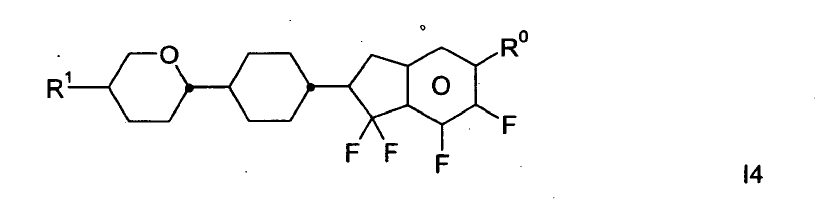 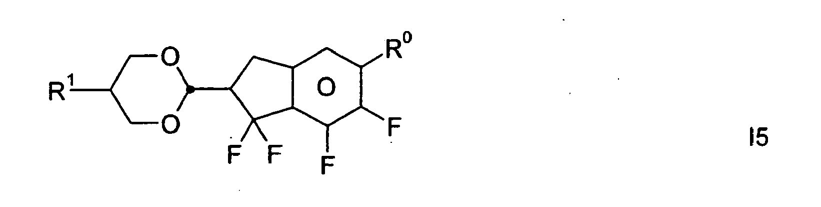 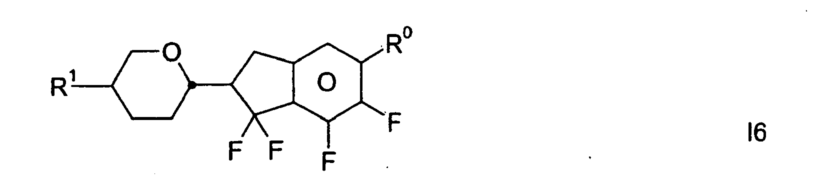 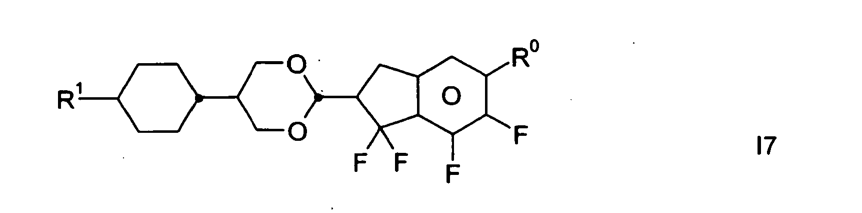 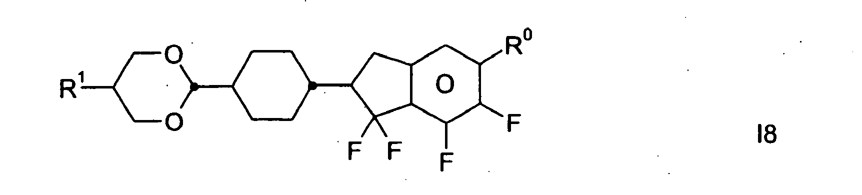 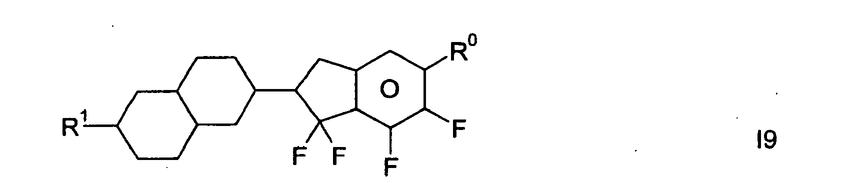 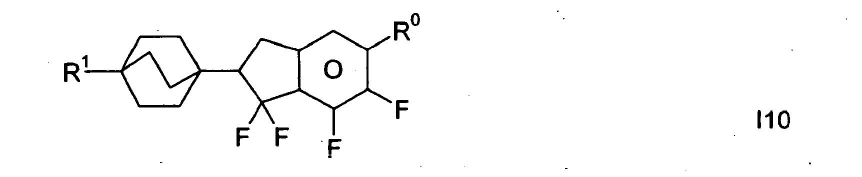 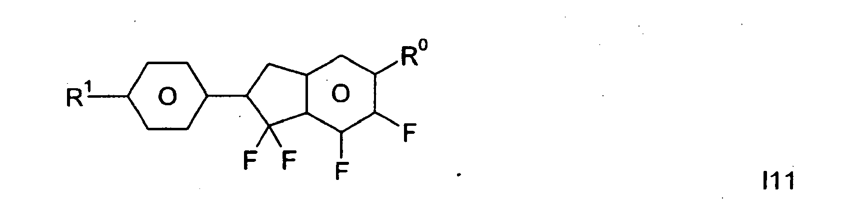 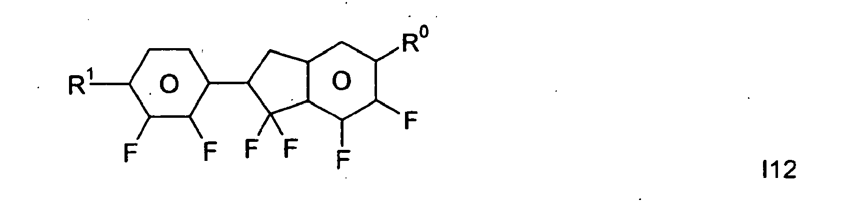 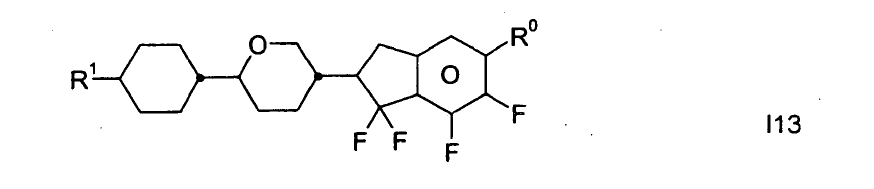 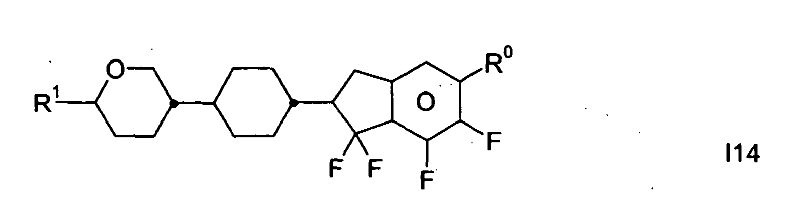 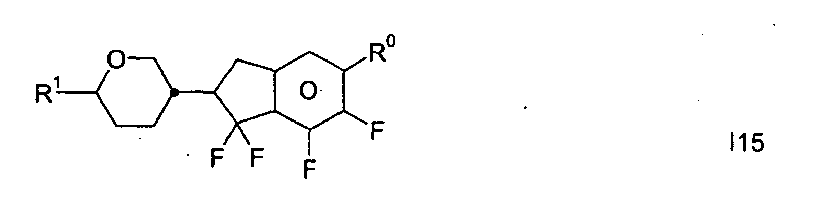 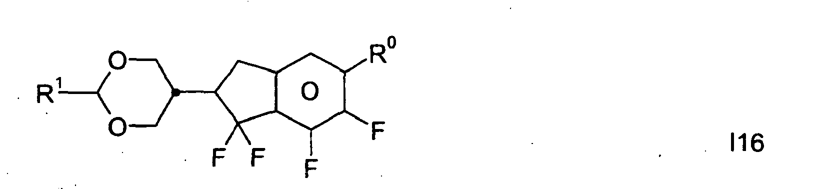 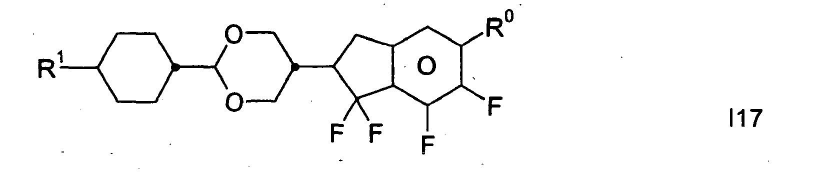 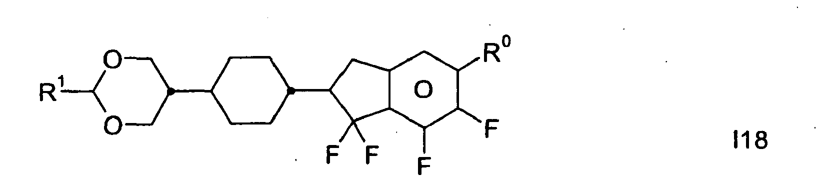 worin
R⁰ und R¹ die in Anspruch 1 angegebenen Bedeutungen hat,
enthält.

3. Flüssigkristallines Medium nach Anspruch 1 oder 2, **dadurch gekennzeichnet, dass** R⁰ H ist.

4. Flüssigkristallines Medium nach einem oder mehreren der Ansprüche 1 bis 3, **dadurch gekennzeichnet, dass** es mindestens eine Verbindung der Formel 11 enthält.

5. Flüssigkristallines Medium nach einem oder mehreren der Ansprüche 1 bis 4, **dadurch gekennzeichnet, dass** es eine oder mehrere Verbindungen ausgewählt aus der Gruppe der Verbindungen der Formeln la bis lg, 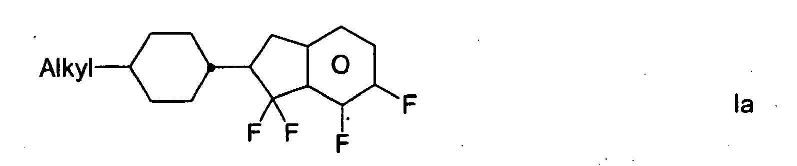 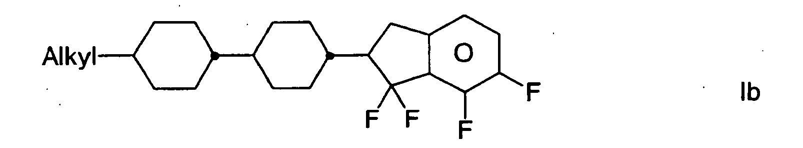 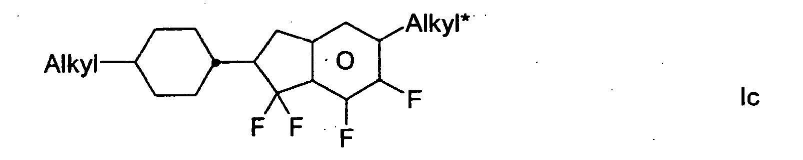 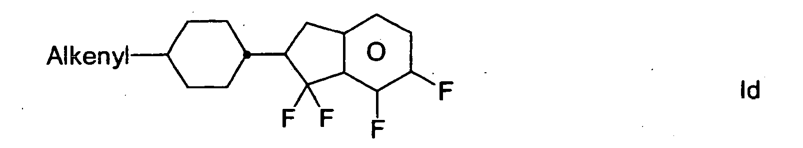 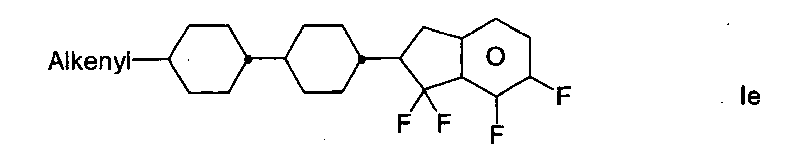 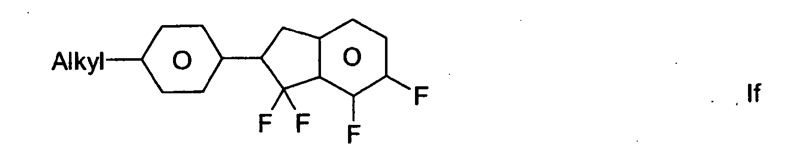 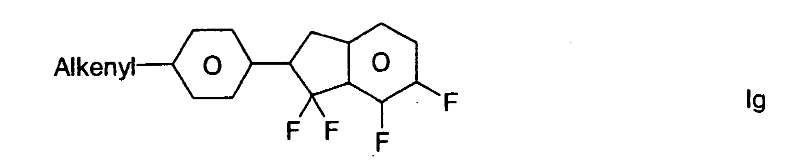 worin
Alkyl und
Alkyl* jeweils unabhängig voneinander einen geradkettigen Alkylrest mit 1-6 C-Atomen, und
Alkenyl einen geradkettigen Alkenylrest mit 2-6 C-Atomen
bedeuten,
enthält.

6. Flüssigkristallines Medium nach einem oder mehreren der Ansprüche 1 bis 5, **dadurch gekennzeichnet, dass** es eine oder mehrere Verbindungen der Formel la enthält.

7. Flüssigkristallines Medium nach einem oder mehreren der Ansprüche 1 bis 6, **dadurch gekennzeichnet, dass** es zusätzlich eine oder mehrere Verbindungen der Formeln IIA und/oder IIB, 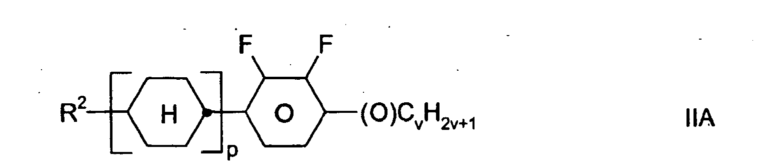 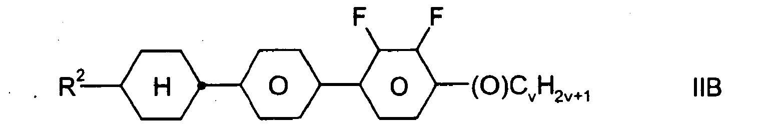 worin
R² einen unsubstituierten, einen einfach durch CN oder CF₃ oder einen mindestens einfach durch Halogen substituierten Alkyl- oder Alkenylrest mit bis zu 15 C-Atomen, wobei in diesen Resten auch eine oder mehrere CH₂-Gruppen jeweils unabhängig voneinander durch -O-, -S-, 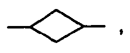 -C≡C-, -CO-, -CO-O-, -O-CO- oder -O-CO-O- so ersetzt sein können, dass O-Atome nicht direkt miteinander verknüpft sind,
p 1 oder 2, und
v 1 bis 6
bedeuten,
enthält.

8. Flüssigkristallines Medium nach einem oder mehreren der Ansprüche 1 bis 7, **dadurch gekennzeichnet, dass** es zusätzlich eine oder mehrere Verbindungen der Formel III, 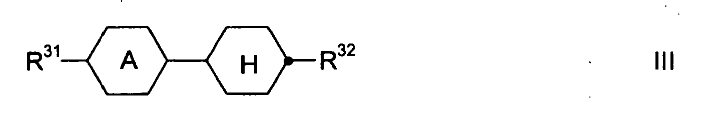 worin
R³¹ und R³² jeweils unabhängig voneinander einen geradkettigen Alkyl-, Alkenyl-, Alkylalkoxy- oder Alkoxyrest mit bis zu 12 C-Atomen bedeuten, und 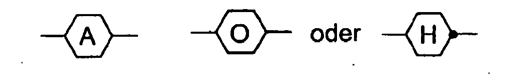 bedeuten,
enthält.

9. Flüssigkristallines Medium nach einem oder mehreren der Ansprüche 1 bis 8, **dadurch gekennzeichnet, dass** es ein, zwei, drei, vier oder mehr Verbindungen der Formel I enthält.

10. Flüssigkristallines Medium nach einem oder mehreren der Ansprüche 1 bis 9, **dadurch gekennzeichnet, dass** der Anteil an Verbindungen der Formel I im Gesamtgemisch mindestens 5 Gew.-% beträgt.

11. Flüssigkristallines Medium nach einem oder mehreren der Ansprüche 1 bis 10, **dadurch gekennzeichnet, dass** der Anteil an Verbindungen der Formeln IIA und/oder IIB im Gesamtgemisch mindestens 20 Gew.-% beträgt.

12. Flüssigkristallines Medium nach einem oder mehreren der Ansprüche 1 bis 11, **dadurch gekennzeichnet, dass** der Anteil an Verbindungen der Formel III im Gesamtgemisch mindestens 5 Gew.-% beträgt.

13. Verwendung eines flüssigkristallinen Mediums nach einem oder mehreren der Ansprüche 1 bis 12 für elektrooptische Zwecke.

14. Elektrooptische Anzeige mit einer Aktivmatrix-Addressierung basierend auf dem ECB-, PALC- oder dem IPS-Effekt, **dadurch gekennzeichnet, dass** sie als Dielektrikum ein flüssigkristallines Medium nach einem oder mehreren der Ansprüche 1 bis 12 enthält.

## Claims

1. Liquid-crystalline medium based on a mixture of polar compounds having negative dielectric anisotropy, **characterised in that** it comprises at least one compound of the formula I 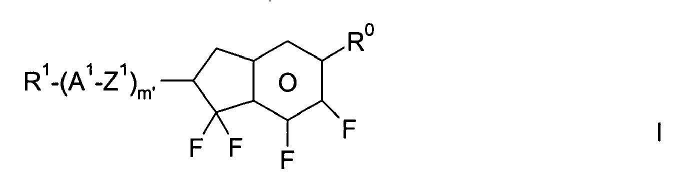 and one or more compounds of the formulae 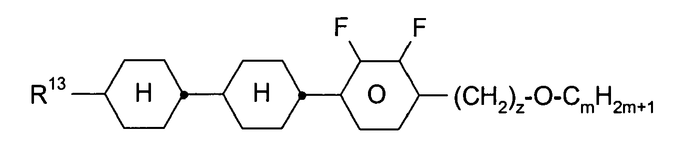 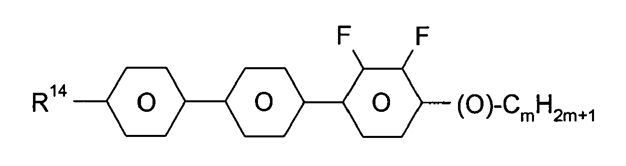 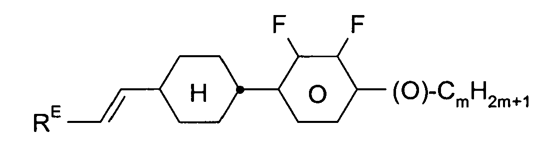 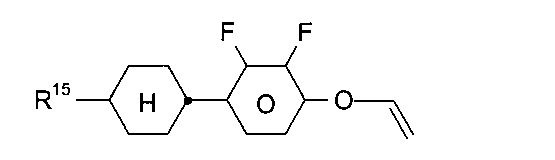 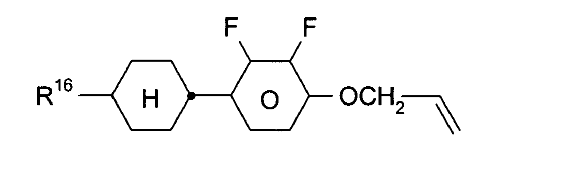 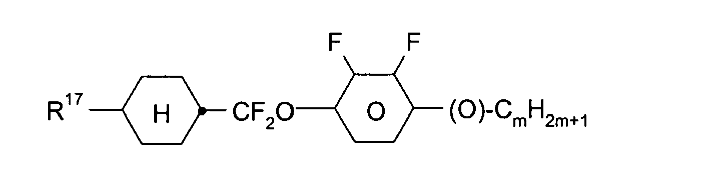 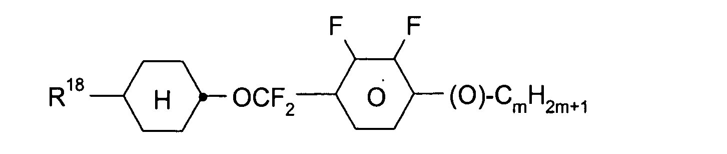 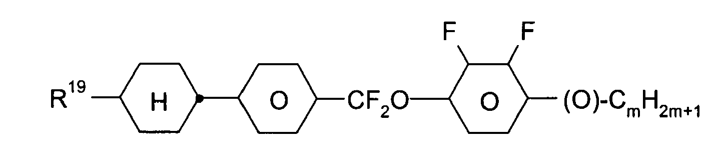 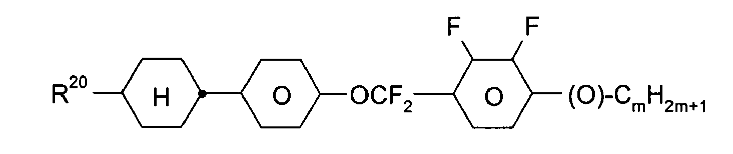 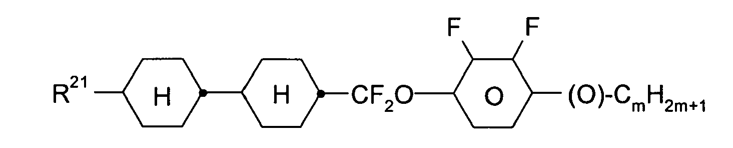 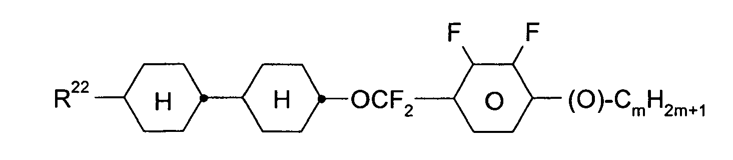 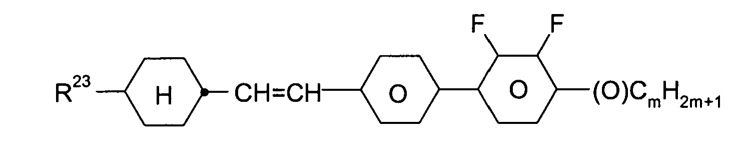 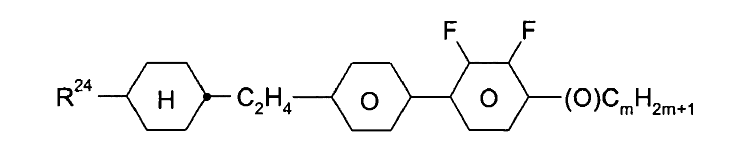 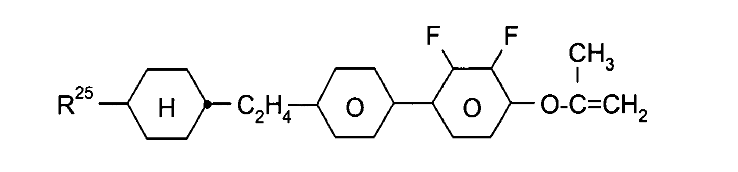 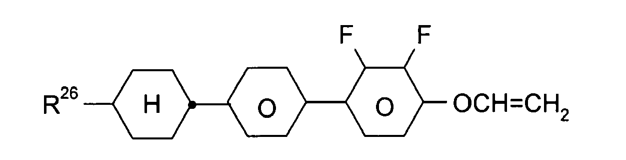 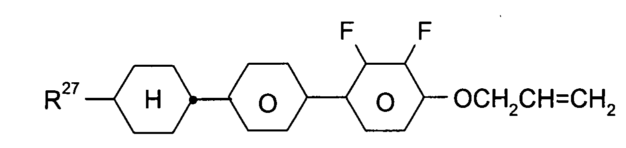 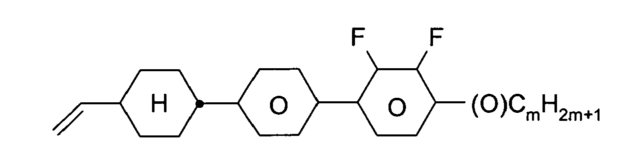 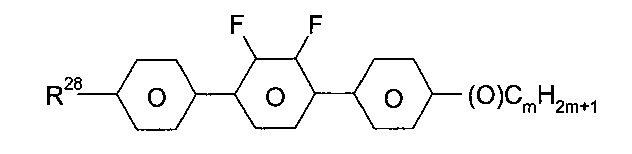 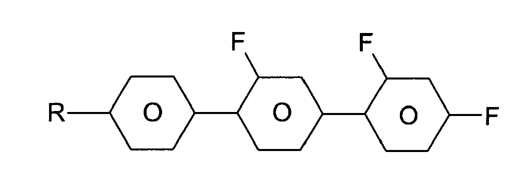 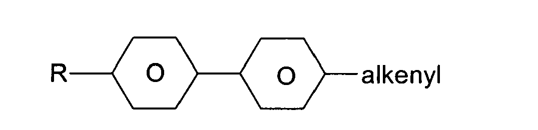 in which
R⁰ and R¹ each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, -◇-, -C≡C-, -OC-O- or -O-CO- in such a way that O atoms are not linked directly to one another,
A¹ denotes
a) a 1,4-cyclohexenylene or 1,4-cyclohexylene radical, in which one or two non-adjacent CH₂ groups may be replaced by -O- or -S-,
b) a 1,4-phenylene radical, in which one or two CH groups may be replaced by N,
c) a radical from the group piperidine-1,4-diyl, 1,4-bicyclo-[2.2.2]octylene, naphthalene-2,6-diyl, decahydronaphthalene-2,6-diyl, 1,2,3,4-tetrahydronaphthalene-2,6-diyl, phenanthrene-2,7-diyl, fluorene-2,7-diyl,
where the radicals a), b) and c) may be mono- or polysubstituted by halogen atoms,
Z¹ denotes -CO-O-, -O-CO-, -CF₂O- -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CH-, -C≡C- or a single bond,
m' denotes 0, 1 or 2,
R¹³-R²⁸ each, independently of one another, have the meanings indicated for R¹,
z and m each, independently of one another, denote 1-6,
R^{E} denotes H, CH₃, C₂H₅ or n-C₃H₇,
R denotes alkyl, alkenyl, alkoxy, alkylalkoxy, alkenyloxy hav- ing 1 or 2 to 6 C atoms respectively, and
alkenyl denotes a straight-chain alkenyl radical having 2-6 C atoms,
with the proviso
that the liquid-crystalline medium does not comprise a compound of the formula

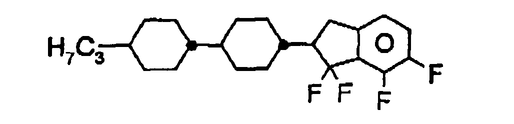

2. Liquid-crystalline medium according to Claim 1, **characterised in that** it comprises at least one compound selected from the formulae I1 to I18 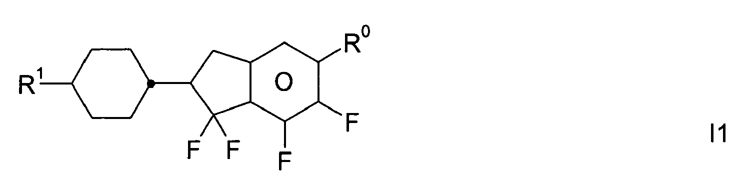 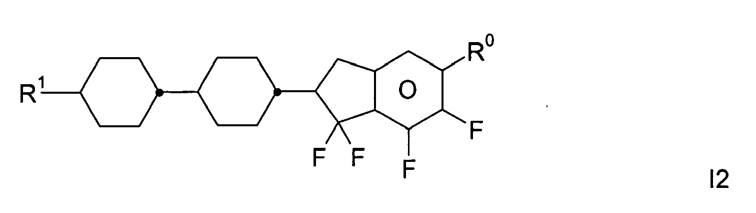 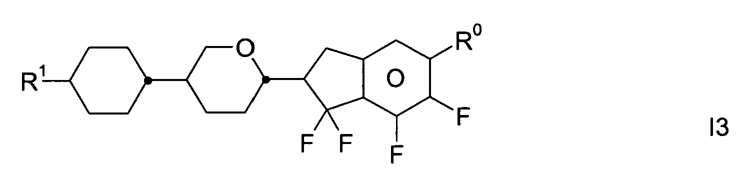 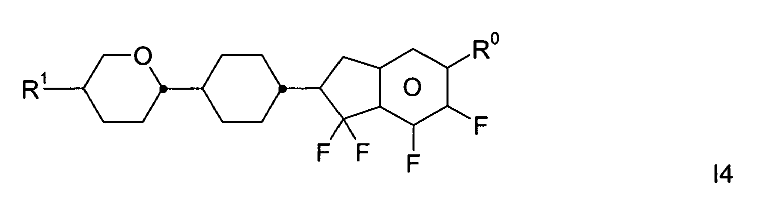 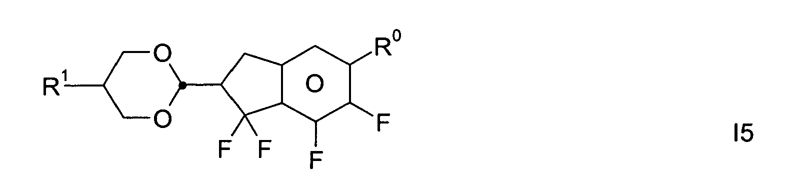 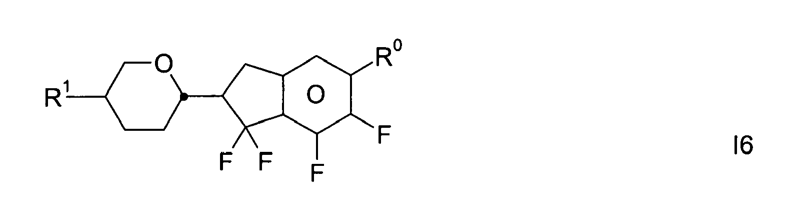 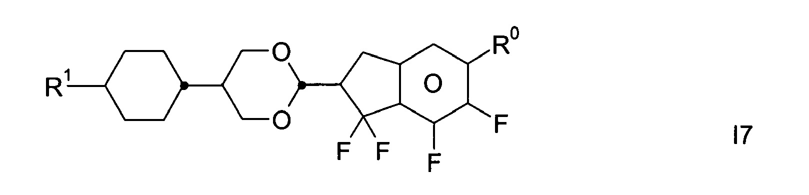 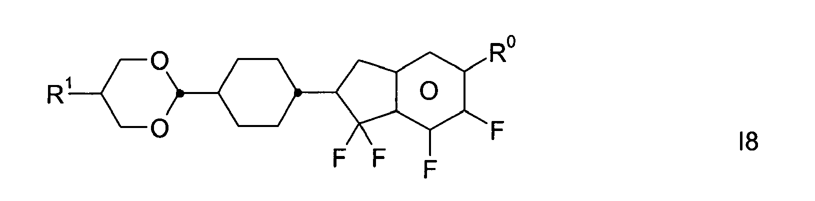 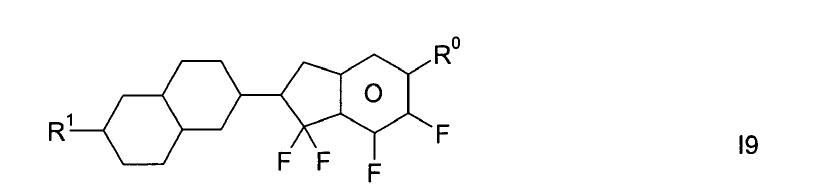 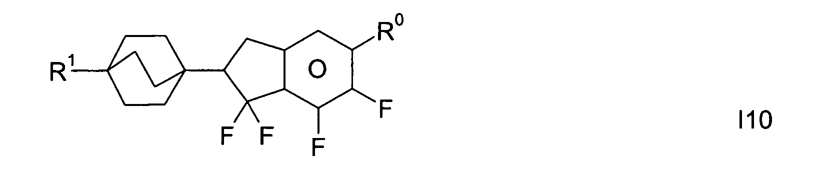 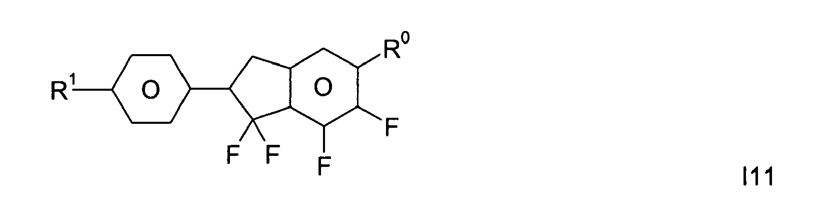 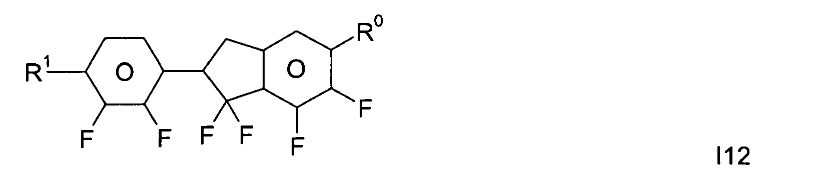 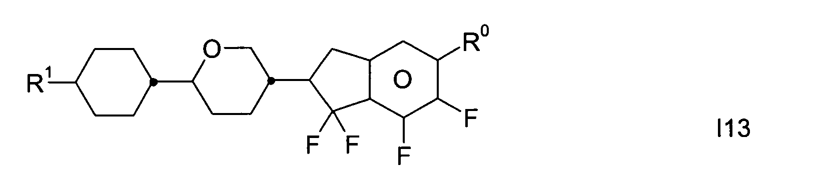 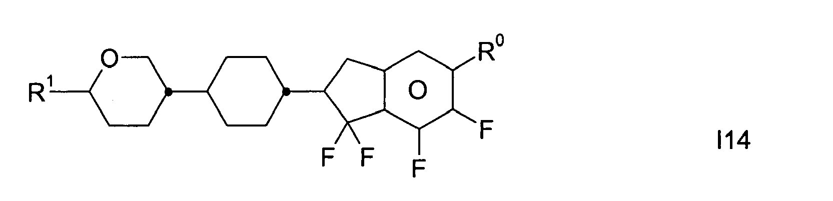 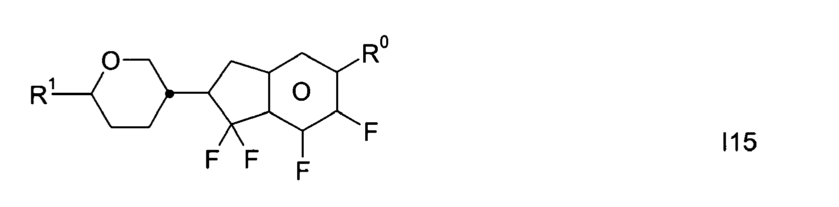 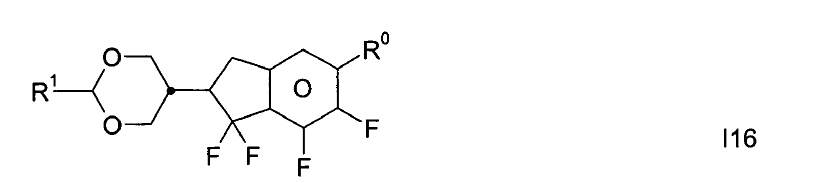 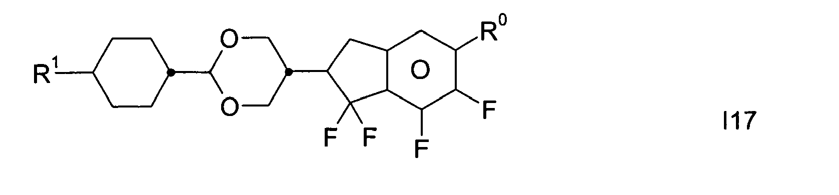 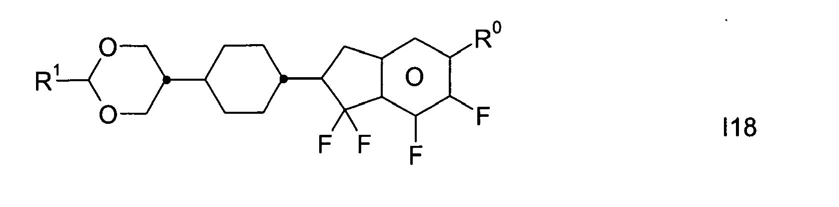 in which
R⁰ and R¹ have the meanings indicated in Claim 1.

3. Liquid-crystalline medium according to Claim 1 or 2, **characterised in that** R⁰ is H.

4. Liquid-crystalline medium according to one or more of Claims 1 to 3, **characterised in that** it comprises at least one compound of the formula I1.

5. Liquid-crystalline medium according to one or more of Claims 1 to 4, **characterised in that** it comprises one or more compounds selected from the group of the compounds of the formulae la to Ig 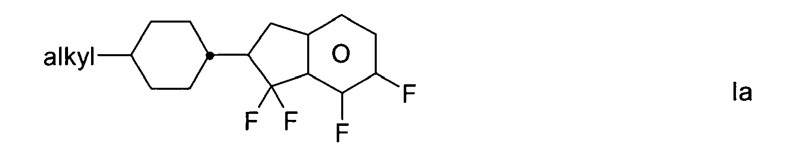 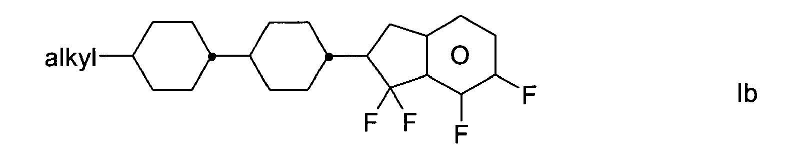 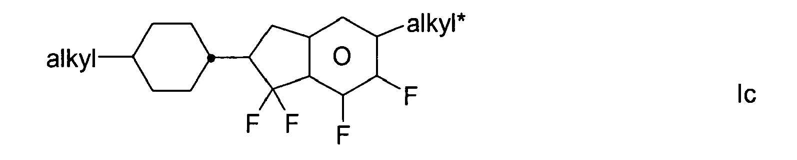 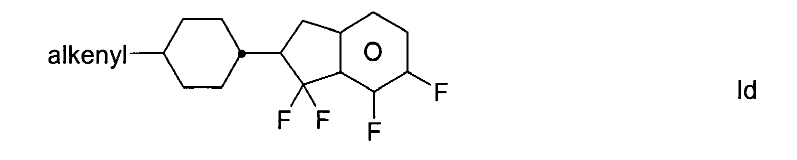 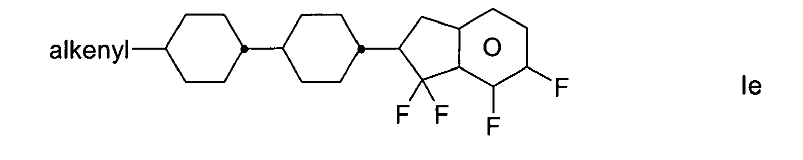 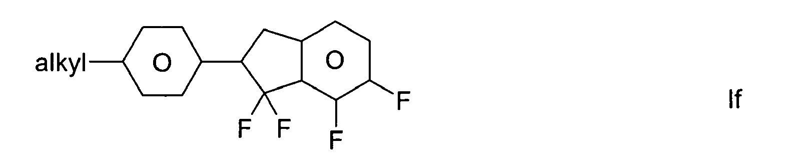 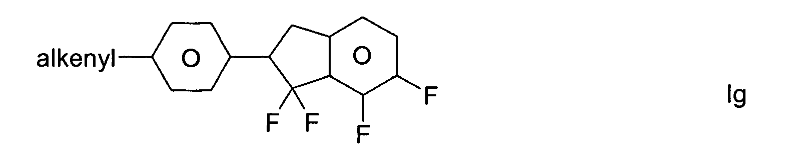 in which
alkyl and alkyl* each, independently of one another, denote a straight- chain alkyl radical having 1-6 C atoms, and
alkenyl denotes a straight-chain alkenyl radical having 2-6 C atoms.

6. Liquid-crystalline medium according to one or more of Claims 1 to 5, **characterised in that** it comprises one or more compounds of the formula Ia.

7. Liquid-crystalline medium according to one or more of Claims 1 to 6, **characterised in that** it additionally comprises one or more compounds of the formulae IIA and/or IIB 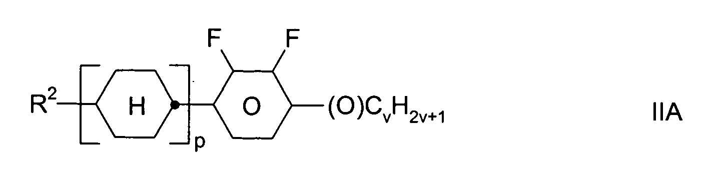 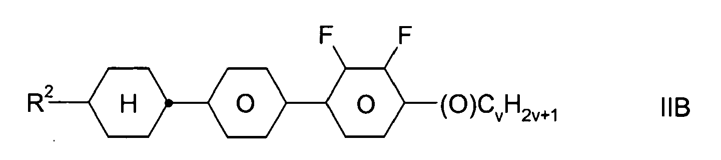 in which
R² denotes an alkyl or alkenyl radical having up to 15 C atoms which is unsubstituted, monosubstituted by CN or CF₃ or at least monosubstituted by halogen, where, in addition, one or more CH₂ groups in these radicals may each be replaced, independently of one another, by -O-, -S-, -◇-, -C≡C-, -CO-, -CO-O-, -O-CO- or -O-CO-O- in such a way that O atoms are not linked directly to one another,
p denotes 1 or 2, and
v denotes 1 to 6.

8. Liquid-crystalline medium according to one or more of Claims 1 to 7, **characterised in that** it additionally comprises one or more compounds of the formula III 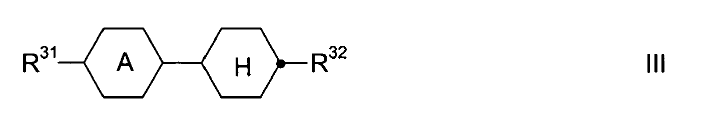 in which
R³¹ and R³² each, independently of one another, denote a straight-chain alkyl, alkenyl, alkylalkoxy or alkoxy radical having up to 12 C atoms, and

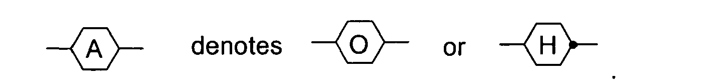

9. Liquid-crystalline medium according to one or more of Claims 1 to 8, **characterised in that** it comprises one, two, three, four or more compounds of the formula I.

10. Liquid-crystalline medium according to one or more of Claims 1 to 9, **characterised in that** the proportion of compounds of the formula I in the mixture as a whole is at least 5% by weight.

11. Liquid-crystalline medium according to one or more of Claims 1 to 10, **characterised in that** the proportion of compounds of the formulae IIA and/or IIB in the mixture as a whole is at least 20% by weight.

12. Liquid-crystalline medium according to one or more of Claims 1 to 11, **characterised in that** the proportion of compounds of the formula III in the mixture as a whole is at least 5% by weight.

13. Use of a liquid-crystalline medium according to one or more of Claims 1 to 12 for electro-optical purposes.

14. Electro-optical display with active-matrix addressing based on the ECB, PALC or IPS effect, **characterised in that** it contains, as dielectric, a liquid-crystalline medium according to one or more of Claims 1 to 12.

## Revendications

1. Milieu cristallin liquide basé sur un mélange de composés polaires ayant une anisotropie diélectrique négative, **caractérisé en ce qu'**il comprend au moins un composé de la formule I 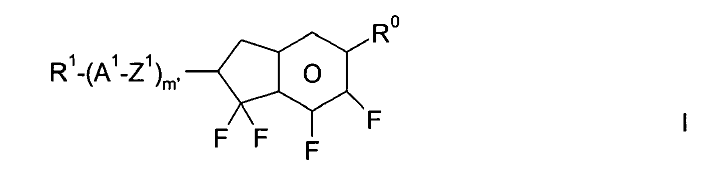 et un ou plusieurs composés des formules 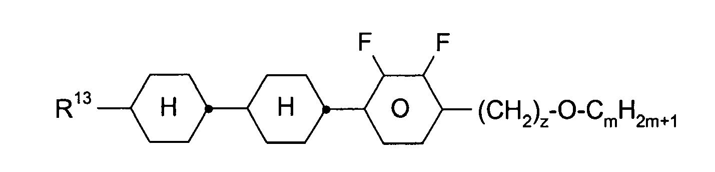 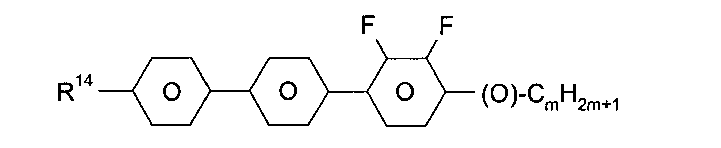 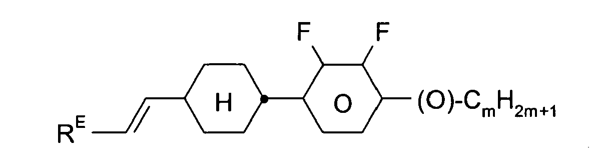 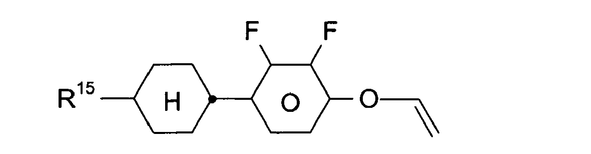 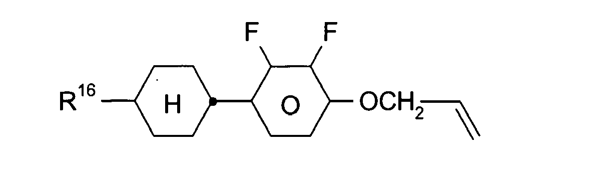 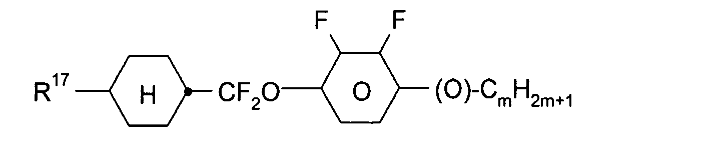 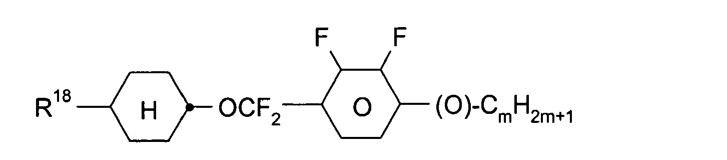 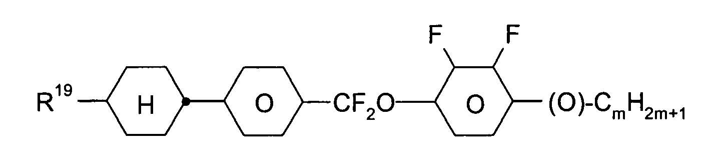 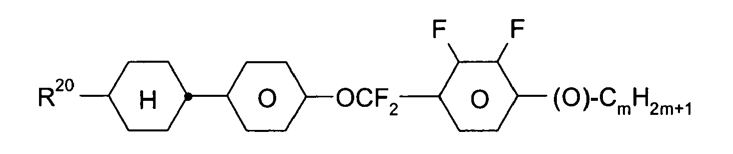 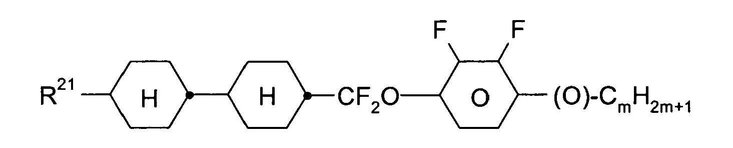 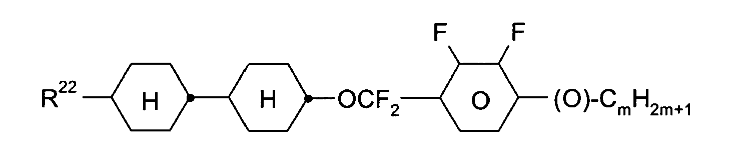 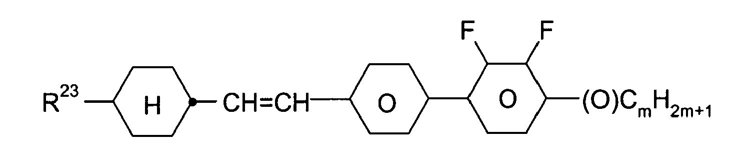 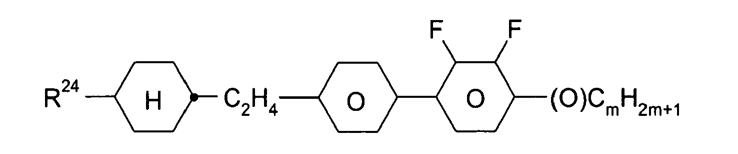 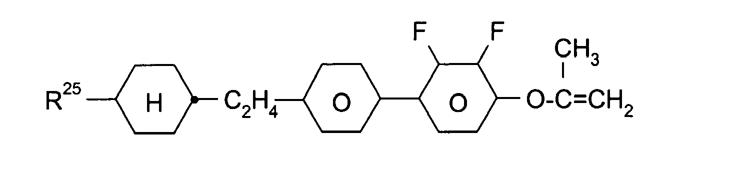 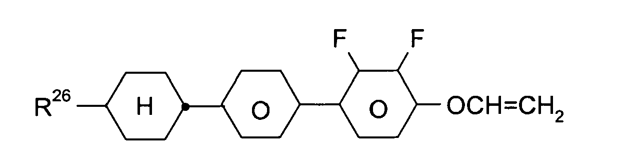 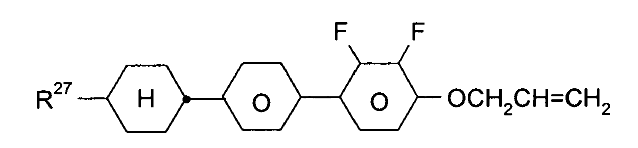 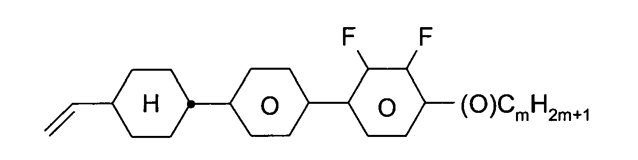 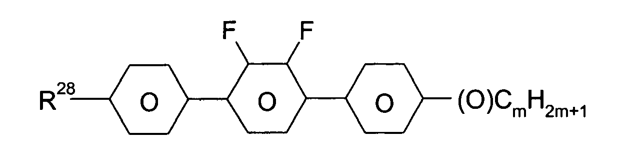 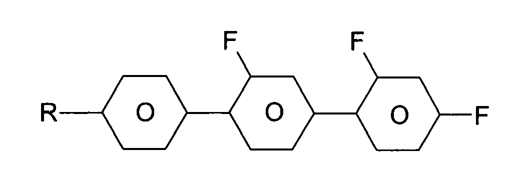 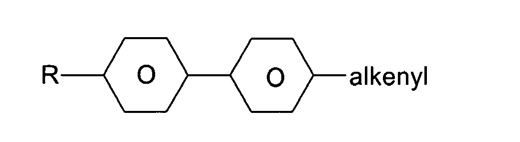 dans lesquelles
R⁰ et R¹, chacun indépendamment l'un de l'autre, représentent H, un radical alkyle ou alkényle ayant jusqu'à 15 atomes de C, qui est non substitué, monosubstitué par CN ou CF₃ ou au moins monosubstitué par halogène, où, en outre, un ou plusieurs groupes CH₂ dans ces radicaux peuvent être remplacés par -O-, -S-, -◇-, -C≡C-, -OC-O- ou -O-CO- de telle sorte que des atomes de O ne soient pas liés directement les uns aux autres,
A¹ représente
a) un radical 1,4-cyclohexénylène ou 1,4-cyclohexylène, dans lequel un ou deux groupes CH₂ non adjacents peuvent être remplacés par -O- ou -S-,
b) un radical 1,4-phénylène, dans lequel un ou deux groupes CH peuvent être remplacés par N,
c) un radical pris parmi le group pipéridine-1,4-diyle, 1,4-bicyclo[2.2.2]octylène, naphthalène-2,6-diyle, décahydro-naphthalène-2,6-diyle, 1,2,3,4-tétrahydronaphthalène-2,6-diyle, phénanthrène-2,7-diyle, fluorène-2,7-diyle,
dans lequel les radicaux a), b) et c) peuvent être mono- ou polysubstitués par des atomes d'halogène,
Z¹ représente -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CH-, -C≡C- ou une liaison simple,
m' représente 0, 1 ou 2,
R¹³-R²⁸ chacun indépendamment les une des autres, ont les signi- fications indiquées pour R¹,
z et m chacun, indépendamment l'un de l'autre, représentent 1-6,
R^{E} représente H, CH₃, C₂H₅ ou n-C₃H₇,
R représente alkyle, alkényle, alcoxy, alkylalcoxy, alkényloxy ayant respectivement de 1 ou 2 à 6 atomes de C, et
alkenyl représente un radical alkényle en chaîne droite ayant 2-6 atomes de C,
étant entendu que
le milieu cristallin liquide ne comprend pas un composé de la formule

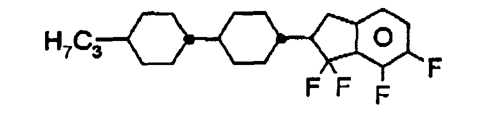

2. Milieu cristallin liquide selon la revendication 1, **caractérisé en ce qu'**il comprend au moins un composé choisi parmi les formules I1 à I18 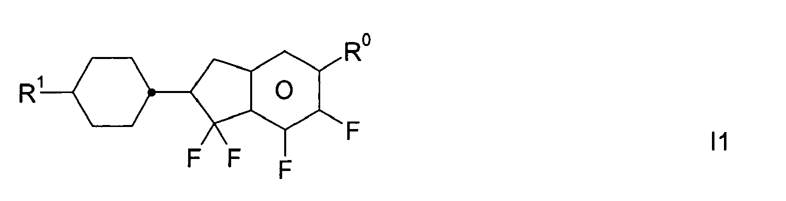 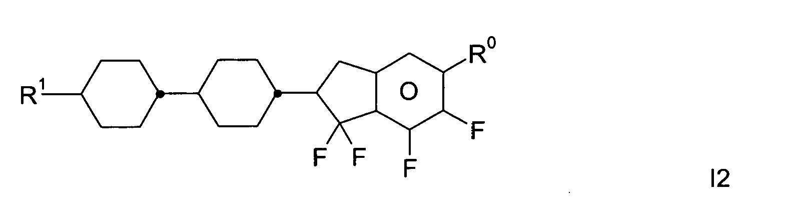 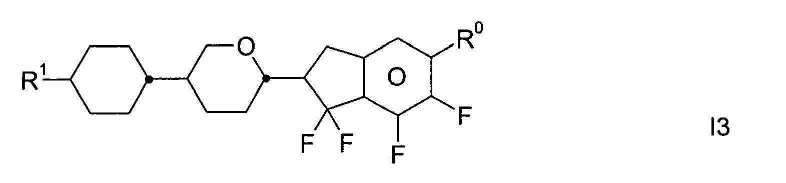 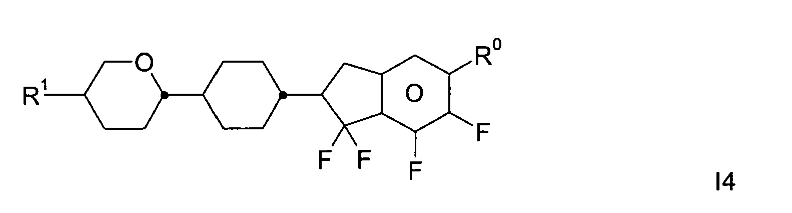 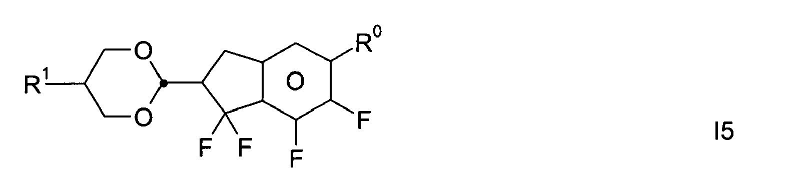 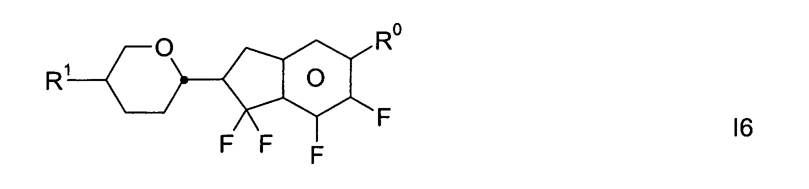 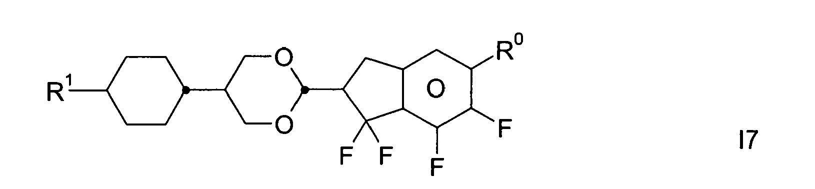 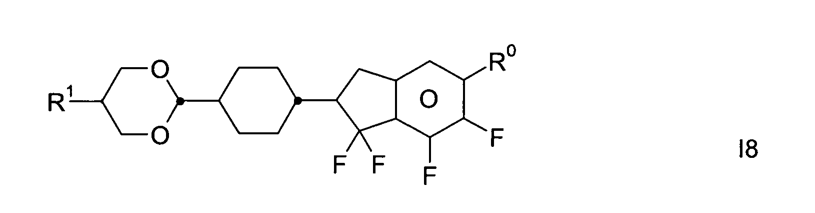 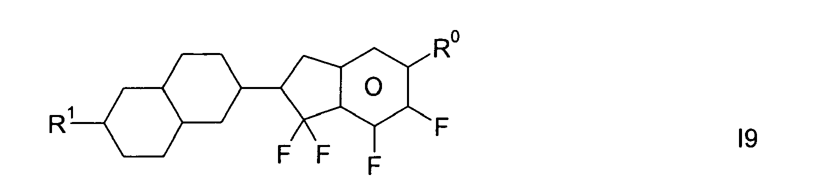 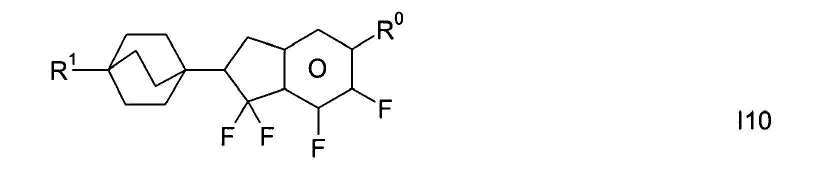 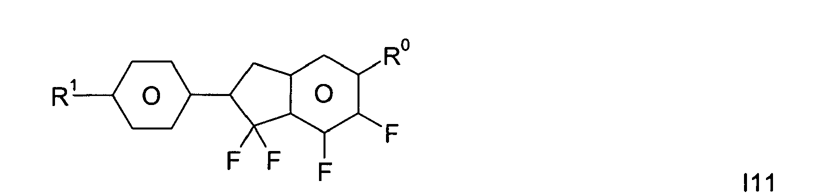 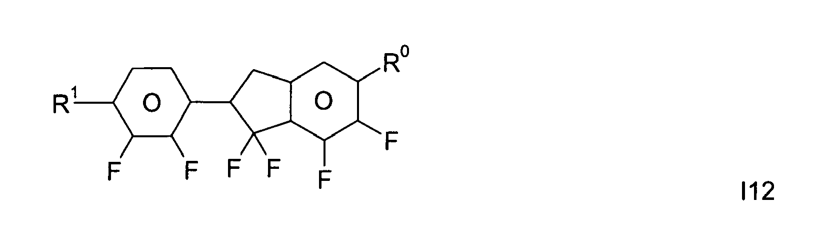 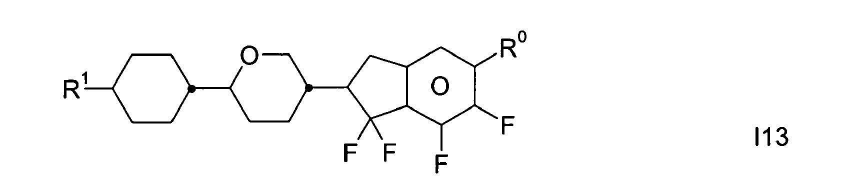 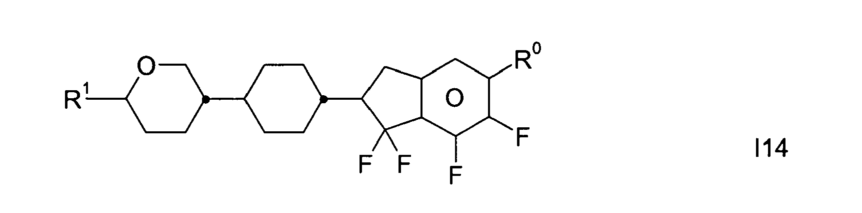 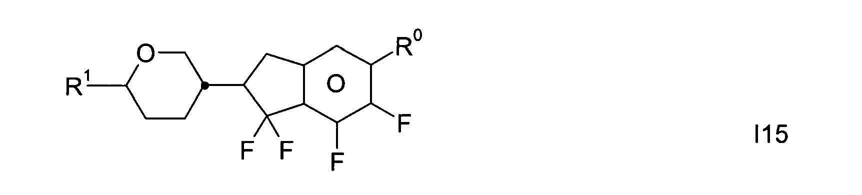 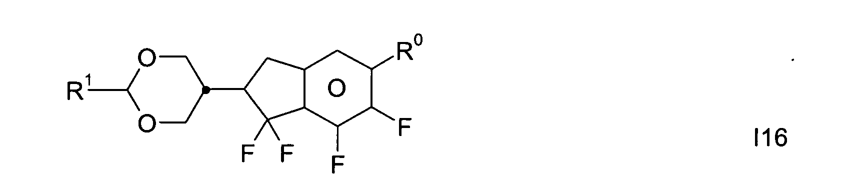 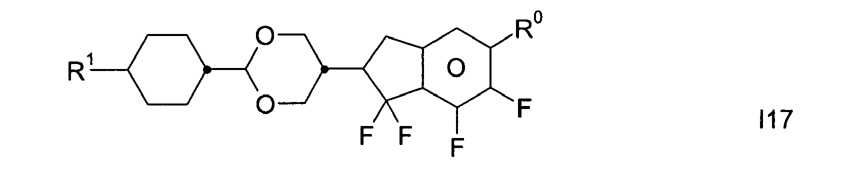 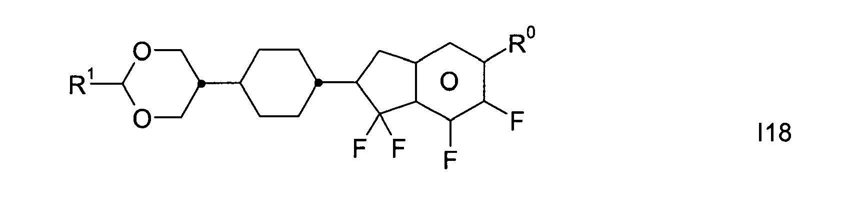 dans lesquelles
R⁰ et R¹ ont les significations indiquées dans la revendication 1.

3. Milieu cristallin liquide selon la revendication 1 ou 2, **caractérisé en ce que** R⁰ est H.

4. Milieu cristallin liquide selon une ou plusieurs des revendications 1 à 3, **caractérisé en ce qu'**il comprend au moins un composé de la formule I1.

5. Milieu cristallin liquide selon une ou plusieurs des revendications 1 à 4, **caractérisé en ce qu'**il comprend un ou plusieurs composés choisis parmi le groupe des composés des formules la à Ig 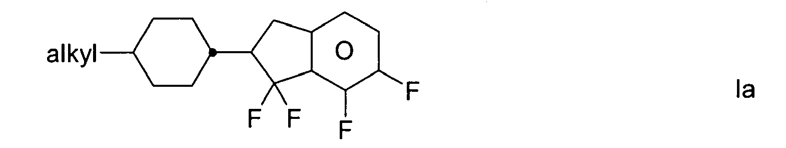 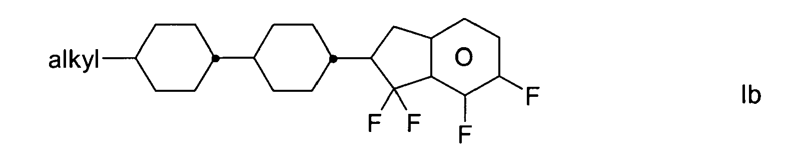 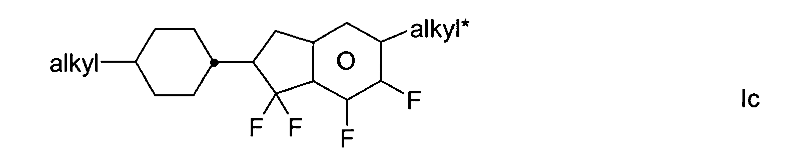 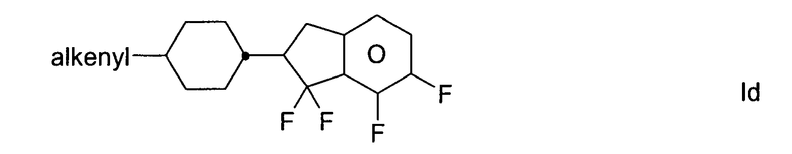 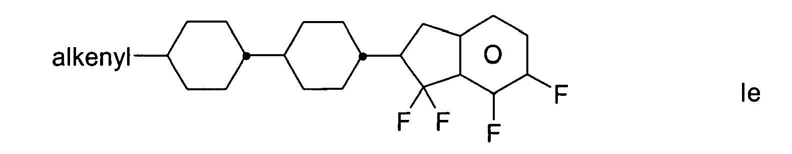 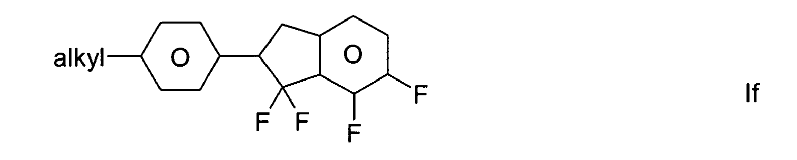 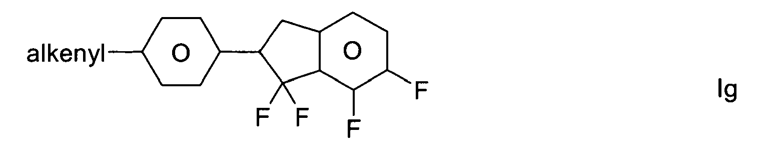 dans lesquelles
alkyl et alkyl* chacun, indépendamment l'un de l'autre, représentent un radical alkyle en chaîne droite ayant 1-6 atomes de C, et
alkenyl représente un radical alkényle en chaîne droite ayant 2-6 atomes de C.

6. Milieu cristallin liquide selon une ou plusieurs des revendications 1 à 5, **caractérisé en ce qu'**il comprend un ou plusieurs composés de la formule la.

7. Milieu cristallin liquide selon une ou plusieurs des revendications 1 à 6, **caractérisé en ce qu'**il comprend additionnellement un ou plusieurs composés des formules IIA et/ou IIB 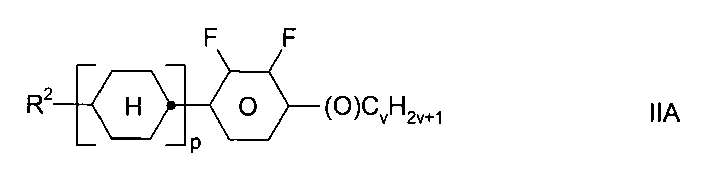 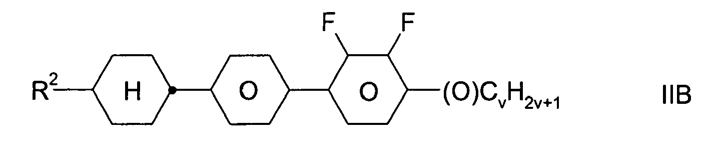 dans lesquelles
R² représente un radical alkyle ou alkényle ayant jus- qu'à 15 atomes de C, qui est non substitué, mono- substitué par CN ou CF₃ ou au moins monosubsti- tué par halogène, où, en outre, un ou plusieurs groupes CH₂ dans ces radicaux peuvent être rem- placés, indépendamment les uns des autres, par -O-, -S-, 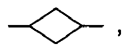 -C≡C-, -CO-, -CO-O-, -O-CO- ou -O-CO-O- de telle sorte que des atomes de O ne soient pas liés directement les uns aux autres,
p représente 1 ou 2, et
v représente 1 à 6.

8. Milieu cristallin liquide selon une ou plusieurs des revendications 1 à 7, **caractérisé en ce qu'**il comprend additionnellement un ou plusieurs composés de la formule III 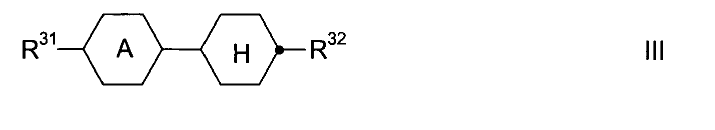 dans laquelle
R³¹ et R³² chacun, indépendamment l'un de l'autre, représente un radical alkyle, alkényle, alkylalcoxy ou alcoxy en chaîne droite ayant jusqu'à 12 atomes de C, et

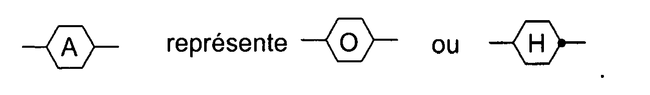

9. Milieu cristallin liquide selon une ou plusieurs des revendications 1 à 8, **caractérisé en ce qu'**il comprend un, deux, trois, quatre composés de la formule I ou plus.

10. Milieu cristallin liquide selon une ou plusieurs des revendications 1 à 9, **caractérisé en ce que** la proportion de composés de la formule I dans le mélange pris dans sa globalité est d'au moins 5% en poids.

11. Milieu cristallin liquide selon une ou plusieurs des revendications 1 à 10, **caractérisé en ce que** la proportion de composés des formules IIA et/ou IIB dans le mélange pris dans sa globalité est d'au moins 20% en poids.

12. Milieu cristallin liquide selon une ou plusieurs des revendications 1 à 11, **caractérisé en ce que** la proportion de composés de la formule III dans le mélange pris dans sa globalité est d'au moins 5% en poids..

13. Utilisation d'un milieu cristallin liquide selon une ou plusieurs des revendications 1 à 12 à des fins électro-optiques.

14. Affichage électro-optique avec adressage par matrice active basé sur l'effet ECB, PALC ou IPS, **caractérisé en ce qu'**il contient, en tant que diélectrique, un milieu cristallin liquide selon une ou plusieurs des revendications 1 à 12.
